# EUROPEAN PATENT APPLICATION

(11) **EP 4 614 892 A1**
(43) Date of publication of application: **10.09.2025**
(21) Application number: 22963848.1
(22) Date of filing: 01.11.2022
(51) Int. Cl.: H04L 27/00

(54) **MESSAGE TRANSMISSION METHOD, APPARATUS, DEVICE AND STORAGE MEDIUM**

(71) Applicant: Beijing Xiaomi Mobile Software Co., Ltd., Beijing 100085 (CN)
(72) Inventor: JIANG, Xiaowei, Beijing 100085 (CN)
(74) Representative: Zimmermann, Tankred Klaus
(86) International application number: PCT/CN2022/129102
(87) International publication number: WO 2024/092530

(57) **Abstract**

The present disclosure provides a message transmission method, an apparatus, a device and a storage medium. The method comprises: sending a sidelink positioning protocol (SLPP) message and/or a ranging and sidelink positioning protocol (RSPP) message, wherein the SLPP message and/or the RSPP message comprise(s): indication information for indicating that acknowledgement (ACK) feedback needs to be performed on the SLPP message and/or the RSPP message. The method of the present disclosure ensures successful transmission of an SLPP message and/or an RSPP message of a second UE, and ensures the transmission stability of the SLPP message and/or the RSPP message, thereby ensuring the stability of SL positioning and/or SL ranging.

## Description

### TECHNICAL FIELD

The disclosure relates to the field of communication technology, and in particular to a method and an apparatus for message transmission, a device, an apparatus and a storage medium.

### BACKGROUND

In a communication system, direct communication between user equipment (UE) is realized by introducing a sidelink (SL) communication method. For UEs connected via the SL, it is usually necessary to perform SL positioning and/or SL ranging. When performing the SL positioning and/or the SL ranging among the UEs, a sidelink positioning protocol (SLPP) and/or a ranging and sidelink positioning protocol (RSPP) is used to realize the positioning by transmitting an SLPP message and/or an RSPP message.

### SUMMARY

The disclosure provides a method and an apparatus for message transmission, a device and a storage medium, for performing reliable transmission of a sidelink positioning protocol (SLPP) message and/or a ranging and sidelink positioning protocol (RSPP) message.

In a first aspect, an embodiment of the disclosure provides a method for message transmission. The method is performed by a first user equipment (UE), including: sending an SLPP message and/or an RSPP message, in which the SLPP message and/or the RSPP message includes indication information for indicating that an acknowledgement (ACK) feedback is required for the SLPP message and/or the RSPP message.

In the disclosure, the first UE sends the SLPP message and/or the RSPP message. The SLPP message and/or the RSPP message includes the indication information for indicating that the ACK feedback is required for the SLPP message and/or the RSPP message. Accordingly, in this disclosure, the second UE receiving the SLPP message and/or the RSPP message is instructed to provide the ACK feedback to the first UE by including the indication information in the SLPP message and/or the RSPP message sent by the first UE. Thus, the first UE may determine, based on the ACK feedback received by the first UE, which second UE does not successfully receive the SLPP message and/or the RSPP message sent by the first UE. In this case, the first UE may retransmit the SLPP message and/or the RSPP message to the second UE that does not successfully receive the SLPP message and/or the RSPP message. In this way, it ensures the successful transmission of the SLPP message and/or the RSPP message for the second UE, ensures the transmission stability of the SLPP message and/or the RSPP message, and thus ensures the stability of SL positioning and/or SL ranging.

In a second aspect, an embodiment of the disclosure provides a method for message transmission. The method is performed by a second UE, including: receiving an SLPP message and/or an RSPP message, in which the SLPP message and/or the RSPP message includes indication information for indicating that an ACK feedback is required for the SLPP message and/or the RSPP message.

In a third aspect, an embodiment of the disclosure provides a communication apparatus. The communication apparatus is configured in a first UE, including: a transceiver module, configured to send an SLPP message and/or an RSPP message, in which the SLPP message and/or the RSPP message includes indication information for indicating that an ACK feedback is required for the SLPP message and/or the RSPP message.

In a fourth aspect, an embodiment of the disclosure provides a communication apparatus. The communication apparatus is configured in a second UE, including: a transceiver module, configured to receive an SLPP message and/or an RSPP message, in which the SLPP message and/or the RSPP message includes indication information for indicating that an ACK feedback is required for the SLPP message and/or the RSPP message.

In a fifth aspect, an embodiment of the disclosure provides a communication device. The communication device includes a processor. When the processor calls a computer program stored in a memory, the method described in the first aspect above is executed.

In a sixth aspect, an embodiment of the disclosure provides a communication device. The communication device includes: a processor. When the processor calls a computer program stored in a memory, the method described in the second aspect above is executed.

In a seventh aspect, an embodiment of the disclosure provides a communication device. The communication device includes: a processor and a memory for storing a computer program. When the processor executes the computer program, the communication device is caused to execute the method described in the first aspect above.

In an eighth aspect, an embodiment of the disclosure provides a communication device. The communication device includes: a processor and a memory for storing a computer program. When the processor executes the computer program, the communication device is caused to execute the method described in the second aspect above.

In a ninth aspect, an embodiment of the disclosure provides a communication device. The communication device includes: a processor and an interface circuit. The interface circuit is configured to receive code instructions and transmit the code instructions to the processor. The processor is configured to run the code instructions, to cause the communication device to execute the method described in the first aspect above.

In a tenth aspect, an embodiment of the disclosure provides a communication device. The communication device includes: a processor and an interface circuit. The interface circuit is configured to receive code instructions and transmit the code instructions to the processor. The processor is configured to run the code instructions, to cause the communication device to execute the method described in the second aspect above.

In an eleventh aspect, an embodiment of the disclosure provides a communication system. The system includes: the communication apparatus in the third aspect and the communication apparatus in the fourth aspect; or the system includes the communication device in the fifth aspect and the communication device in the sixth aspect; or the system includes the communication device in the seventh aspect and the communication device in the eighth aspect; or the system includes the communication device in the ninth aspect and the communication device in the tenth aspect.

In a twelfth aspect, an embodiment of the disclosure provides a computer-readable storage medium, configured to store instructions employed by the UE. When the instructions are executed, the UE is caused to execute the method of any of the first aspect to the second aspect.

In a thirteenth aspect, the disclosure further provides a computer program product including a computer program. When the computer program is run by a computer, the computer is caused to execute the method of any of the first aspect to the second aspect.

In a fourteenth aspect, the disclosure provides a chip system. The chip system includes at least one processor and an interface, for supporting the UE to realize the functions involved in any one of the first aspect to the second aspect, e.g., determining or processing at least one of data and information involved in the method described above. In a possible design, the chip system further includes a memory. The memory is configured to store necessary computer programs and data for the UE. The chip system may be composed of chips or may include chips and other discrete devices.

In a fifteenth aspect, the disclosure provides a computer program. When the computer program is run by a computer, the computer is caused to execute the method in any one of the first aspect to the second aspect.

### BRIEF DESCRIPTION OF THE DRAWINGS

The above-mentioned and/or additional aspects and advantages of the disclosure will become apparent and readily appreciated from the following description of embodiments, taken in combination with the accompanying figures.
FIG. 1 is a schematic diagram illustrating a communication system according to an embodiment of the disclosure.
FIG. 2 is a flow chart illustrating a method for message transmission according to an embodiment of the disclosure.
FIG. 3 is a flow chart illustrating a method for message transmission according to an embodiment of the disclosure.
FIG. 4 is a flow chart illustrating a method for message transmission according to an embodiment of the disclosure.
FIG. 5 is a flow chart illustrating a method for message transmission according to an embodiment of the disclosure.
FIG. 6a to FIG. 6d are flow charts illustrating a method for message transmission according to an embodiment of the disclosure.
FIG. 7 is a flow chart illustrating a method for message transmission according to an embodiment of the disclosure.
FIG. 8 is a flow chart illustrating a method for message transmission according to an embodiment of the disclosure.
FIG. 9 is a flow chart illustrating a method for message transmission according to an embodiment of the disclosure.
FIG. 10 is a flow chart illustrating a method for message transmission according to an embodiment of the disclosure.
FIG. 11 is a flow chart illustrating a method for message transmission according to an embodiment of the disclosure.
FIG. 12 is a flow chart illustrating a method for message transmission according to an embodiment of the disclosure.
FIG. 13a to FIG. 13c are flow charts illustrating a method for message transmission according to an embodiment of the disclosure.
FIG. 14 is a flow chart illustrating a method for message transmission according to an embodiment of the disclosure.
FIG. 15 is a flow chart illustrating a method for message transmission according to an embodiment of the disclosure.
FIG. 16 is a flow chart illustrating a method for message transmission according to an embodiment of the disclosure.
FIG. 17 is a flow chart illustrating a method for message transmission according to an embodiment of the disclosure.
FIG. 18 is a flow chart illustrating a method for message transmission according to an embodiment of the disclosure.
FIG. 19 is a flow chart illustrating a method for message transmission according to an embodiment of the disclosure.
FIG. 20 is a flow chart illustrating a method for message transmission according to an embodiment of the disclosure.
FIG. 21 is a flow chart illustrating a method for message transmission according to a new modification of the disclosure.
FIG. 22 is a flow chart illustrating a method for message transmission according to an embodiment of the disclosure.
FIG. 23 is a flow chart illustrating a method for message transmission according to an embodiment of the disclosure.
FIG. 24 is a schematic diagram illustrating interaction of a method for message transmission according to another embodiment of the disclosure.
FIG. 25 is a schematic diagram illustrating interaction of a method for message transmission according to another embodiment of the disclosure.
FIG. 26 is a block diagram illustrating a communication apparatus according to an embodiment of the disclosure.
FIG. 27 is a block diagram illustrating a communication apparatus according to an embodiment of the disclosure.
FIG. 28 is a block diagram illustrating a user equipment (UE) according to an embodiment of the disclosure.
FIG. 29 is a block diagram illustrating a network device according to an embodiment of the disclosure.

### DETAILED DESCRIPTION

Reference will now be made in detail to the exemplary embodiments, examples of which are illustrated in the accompanying figures. When the following description refers to the accompanying figures, the same numerals in different figures refer to the same or similar elements unless otherwise indicated. The implementations described in the following exemplary embodiments do not represent all implementations consistent with the embodiments of the disclosure. Rather, they are merely examples of devices and methods consistent with some aspects of the embodiments of the disclosure as recited in the appended claims.

Terms used in the embodiments of the disclosure are for the purpose of describing specific embodiments only, and are not intended to limit the embodiments of the disclosure. As used in the examples of this disclosure and the appended claims, the singular forms "a/an" and "the" are also intended to include the plural forms unless the context clearly dictates otherwise. It should also be understood that the term "and/or" as used herein refers to and includes any and all possible combinations of one or more of the associated listed items.

It should be understood that although the embodiments of the disclosure may use the terms first, second, third, etc. to describe various information, the information should not be limited to these terms. These terms are only used to distinguish information of the same type from one another. For example, without departing from the scope of the embodiments of the disclosure, first information may also be called second information, and similarly, second information may also be called first information. Depending on the context, the word "if" and "in case" as used herein may be interpreted as "while" or "when" or "in response to a determination".

Embodiments of the disclosure are described in detail below, and examples of the embodiments are illustrated in the accompanying figures, in which the same or similar symbols from beginning to end indicate the same or similar elements. The embodiments described below by reference to the accompanying figures are exemplary and are intended to be used to explain the disclosure, and are not to be construed as a limitation of the disclosure.

For ease of understanding, the terms involved in the disclosure are first explained.
1. 5th generation mobile networks (5G).
   5G is a new generation of broadband mobile communication technology with high characteristics such as speed rate and low latency, and serves as a network infrastructure for achieving interconnection among humans, machines, and things.
2. Sidelink (SL).

The SL is a link for direct communication between terminals.

In order to better understand a method for message transmission according to embodiments of the disclosure, firstly, description is made below to a communication system to which embodiments of the disclosure are applicable.

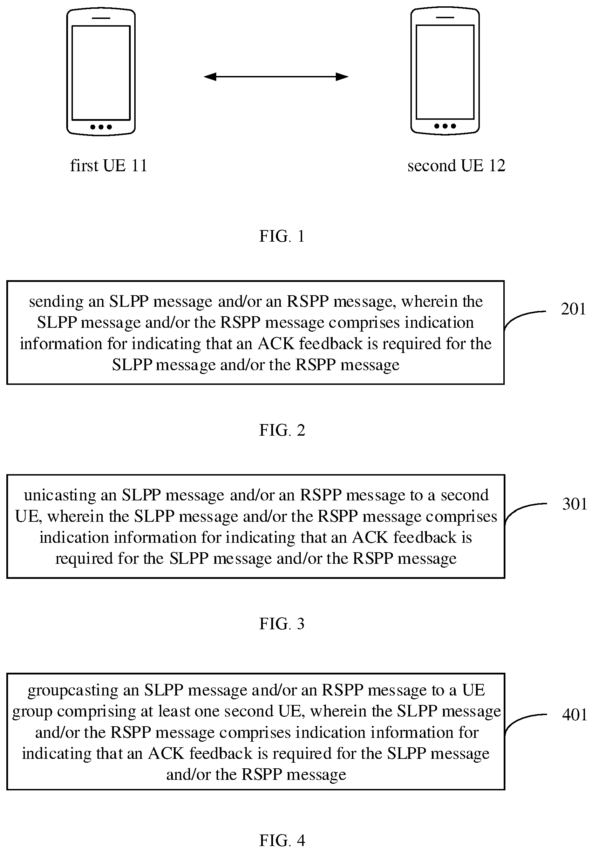

Referring to FIG. 1, FIG. 1 is a schematic diagram illustrating a communication system according to an embodiment of the disclosure. The communication system may include, but is not limited to, two user equipment (UE). The number and form of devices illustrated in FIG. 1 are only for examples and do not constitute a limitation on embodiments of the disclosure, and two or more UEs may be included in practical application. The communication system illustrated in FIG. 1 takes an example of including a first UE 11 and a second UE 12.

It should be noted that a technical solution of embodiments of the disclosure may be applied to various communication systems, such as a long term evolution (LTE) system, a 5G mobile communication system, a 5G new radio (NR) system, or other future new mobile communication systems.

The first UE 11 and the second UE 12 in embodiments of the disclosure may be entities in a user side for receiving or sending signals, such as a mobile phone. The UE may also be referred to as a terminal, a user equipment, a mobile station (MS), a mobile terminal (MT), and the like. The UE may be an automobile with a communication function, a smart automobile, a mobile phone, a wearable device, a pad, a computer with a wireless transceiver function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in a transportation safety, a wireless terminal in a smart city, a wireless terminal in a smart home, and the like. Detailed technologies and detailed device forms employed by the UE are not limited in embodiments of the disclosure.

It may be understood that the communication system described in embodiments of the disclosure are intended to explain technical solutions of embodiments of the disclosure more clearly, and does not constitute a limitation to the technical solutions provided by embodiments of the disclosure. Those skilled in the art may know that, with evolution of a system architecture and emergence of a new service scenario, the technical solutions provided in embodiments of the disclosure are equally applied to similar technical problems.

Description is made in detail below to a method and an apparatus for message transmission, a device and a storage medium according to the embodiments of the disclosure with reference to accompanying figures.

It should be noted that in the disclosure, the method for message transmission provided in any embodiment may be performed individually. Any implementation of embodiments may be performed individually, or in combination with other embodiments, or in combination with possible implementations of other embodiments, or in combination with any technical solution in the related art.

FIG. 2 is a flow chart illustrating a method for message transmission according to an embodiment of the disclosure. The method is performed by a first UE. As shown in FIG. 2, the method for message transmission may include the following step 201.

At step 201, a sidelink positioning protocol (SLPP) message and/or a ranging and sidelink positioning protocol (RSPP) message is sent, in which the SLPP message and/or the RSPP message includes indication information for indicating that an acknowledgement (ACK) feedback is required for the SLPP message and/or the RSPP message.

In an embodiment of the disclosure, the SLPP message and/or the RSPP message may be a message required to be transmitted when performing SL positioning and/or SL ranging between UEs. The SLPP message and/or the RSPP message may be transmitted to a second UE by the first UE. The second UE may be a UE that is connected to the first UE via SL.

Further, in an embodiment of the disclosure, "the ACK feedback is required for the SLPP message and/or the RSPP message" may be understood as: when receiving the SLPP message and/or the RSPP message transmitted by the first UE, the second UE is required to provide the ACK feedback to the first UE; and when not receiving the SLPP message and/or RSPP message transmitted by the first UE, the second UE does not provide the ACK feedback to the first UE.

Accordingly, in an embodiment of the disclosure, by including the indication information in the SLPP message and/or the RSPP message, the second UE is instructed to provide the ACK feedback to the first UE after receiving the SLPP message and/or the RSPP message. Thus, the first UE may determine, based on the received ACK feedback, whether the first UE has successfully sent the SLPP message and/or the RSPP message to the second UE, and which second UE successfully receives the SLPP message and/or the RSPP message sent by the first UE and which second UE does not successfully receive the SLPP message and/or RSPP message sent by the first UE. In this case, the first UE may retransmit the SLPP message and/or the RSPP message to the second UE that does not successfully receive the SLPP message and/or the RSPP message. This ensures the successful transmission of the SLPP message and/or the RSPP message for the second UE, ensures the transmission stability of the SLPP message and/or the RSPP message, and thus ensures the stability of the SL positioning and/or the SL ranging.

In summary, in the method for message transmission provided in embodiments of the disclosure, the first UE sends the SLPP message and/or the RSPP message. The SLPP message and/or the RSPP message includes the indication information for indicating that the ACK feedback is required for the SLPP message and/or the RSPP message. Accordingly, in the disclosure, the second UE receiving the SLPP message and/or the RSPP message is instructed to provide the ACK feedback to the first UE by including the indication information in the SLPP message and/or the RSPP message sent by the first UE. Thus, the first UE may determine, based on the ACK feedback received by the first UE, which second UE does not successfully receive the SLPP message and/or RSPP message sent by the first UE. In this case, the first UE may retransmit the SLPP message and/or the RSPP message to the second UE that does not successfully receive the SLPP message and/or the RSPP message. This ensures the successful transmission of the SLPP message and/or the RSPP message for the second UE, ensures the transmission stability of the SLPP message and/or the RSPP message, and thus ensures the stability of the SL positioning and/or the SL ranging.

FIG. 3 is a flow chart illustrating a method for message transmission according to an embodiment of the disclosure. The method is performed by a first UE. As shown in FIG. 3, the method for message transmission may include the following step 301.

At step 301, an SLPP message and/or an RSPP message is unicast to a second UE, in which the SLPP message and/or the RSPP message includes indication information for indicating that an ACK feedback is required for the SLPP message and/or the RSPP message.

As shown in the above, the SLPP message and/or the RSPP message is a message required to be transmitted when performing SL positioning and/or SL ranging between UEs. In an embodiment of the disclosure, when the first UE unicasts the SLPP message and/or the RSPP message to the second UE, it indicates that the first UE only requests to perform an SL ranging service and/or an SL positioning service with the second UE.

In addition, details about step 301 may be described with reference to the above embodiments.

In summary, in the method for message transmission provided in embodiments of the disclosure, the first UE sends the SLPP message and/or the RSPP message. The SLPP message and/or the RSPP message includes the indication information for indicating that the ACK feedback is required for the SLPP message and/or the RSPP message. Accordingly, in the disclosure, the second UE receiving the SLPP message and/or the RSPP message is instructed to provide the ACK feedback to the first UE by including the indication information in the SLPP message and/or the RSPP message sent by the first UE. Thus, the first UE may determine, based on the ACK feedback received by the first UE, which second UE does not successfully receive the SLPP message and/or RSPP message sent by the first UE. In this case, the first UE may retransmit the SLPP message and/or the RSPP message to the second UE that does not successfully receive the SLPP message and/or the RSPP message. This ensures the successful transmission of the SLPP message and/or the RSPP message for the second UE, ensures the transmission stability of the SLPP message and/or the RSPP message, and thus ensures the stability of the SL positioning and/or the SL ranging.

FIG. 4 is a flow chart illustrating a method for message transmission according to an embodiment of the disclosure. The method is performed by a first UE. As shown in FIG. 4, the method for message transmission may include the following step 401.

At step 401, an SLPP message and/or an RSPP message is groupcast to a UE group including at least one second UE, in which the SLPP message and/or the RSPP message includes indication information for indicating that an ACK feedback is required for the SLPP message and/or the RSPP message.

As shown in the above, the SLPP message and/or the RSPP message is: a message required to be transmitted when performing SL positioning and/or SL ranging between UEs. In an embodiment of the disclosure, when the first UE groupcasts the SLPP message and/or the RSPP message to the UE group, it indicates that the first UE requests to perform a group ranging service and/or a group positioning service with at least one second UE in the UE group.

In addition, details about step 401 may be described with reference to the above embodiments.

In summary, in the method for message transmission provided in embodiments of the disclosure, the first UE sends the SLPP message and/or the RSPP message. The SLPP message and/or the RSPP message includes the indication information for indicating that the ACK feedback is required for the SLPP message and/or the RSPP message. Accordingly, in the disclosure, the second UE receiving the SLPP message and/or the RSPP message is instructed to provide the ACK feedback to the first UE by including the indication information in the SLPP message and/or the RSPP message sent by the first UE. Thus, the first UE may determine, based on the ACK feedback received by the first UE, which second UE does not successfully receive the SLPP message and/or RSPP message sent by the first UE. In this case, the first UE may retransmit the SLPP message and/or the RSPP message to the second UE that does not successfully receive the SLPP message and/or the RSPP message. This ensures the successful transmission of the SLPP message and/or the RSPP message for the second UE, ensures the transmission stability of the SLPP message and/or the RSPP message, and thus ensures the stability of an SL positioning and/or an SL ranging.

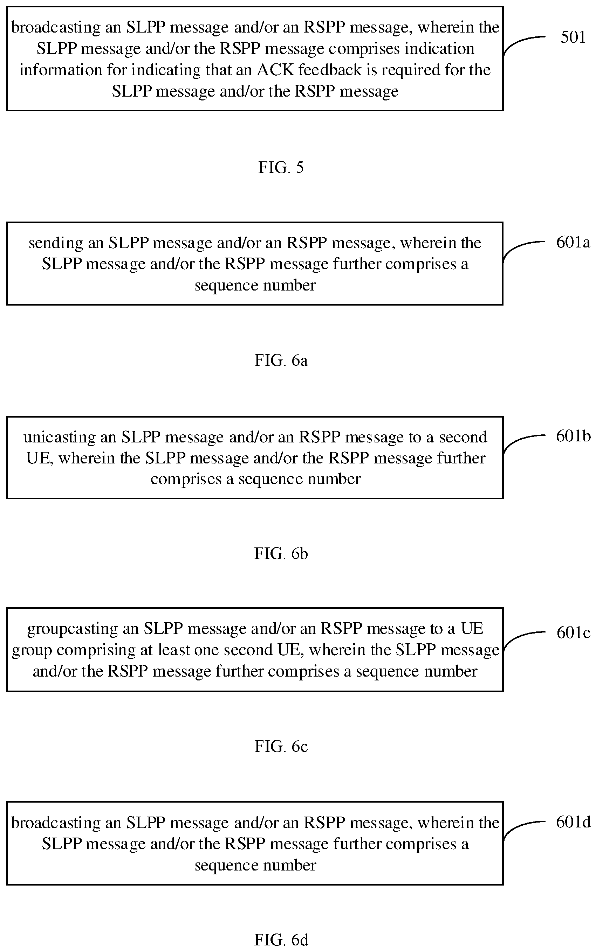

FIG. 5 is a flow chart illustrating a method for message transmission according to an embodiment of the disclosure. The method is performed by a first UE. As shown in FIG. 5, the method for message transmission may include the following step 501.

At step 501, an SLPP message and/or an RSPP message is broadcast, in which the SLPP message and/or the RSPP message includes indication information for indicating that an ACK feedback is required for the SLPP message and/or the RSPP message.

In addition, details about step 501 may be described with reference to the above embodiments.

In summary, in the method for message transmission provided in embodiments of the disclosure, the first UE sends the SLPP message and/or the RSPP message. The SLPP message and/or the RSPP message includes the indication information for indicating that the ACK feedback is required for the SLPP message and/or the RSPP message. Accordingly, in the disclosure, the second UE receiving the SLPP message and/or the RSPP message is instructed to provide the ACK feedback to the first UE by including the indication information in the SLPP message and/or the RSPP message sent by the first UE. Thus, the first UE may determine, based on the ACK feedback received by the first UE, which second UE does not successfully receive the SLPP message and/or RSPP message sent by the first UE. In this case, the first UE may retransmit the SLPP message and/or the RSPP message to the second UE that does not successfully receive the SLPP message and/or the RSPP message. This ensures the successful transmission of the SLPP message and/or the RSPP message for the second UE, ensures the transmission stability of the SLPP message and/or the RSPP message, and thus ensures the stability of an SL positioning and/or an SL ranging.

FIG. 6a is a flow chart illustrating a method for message transmission according to another embodiment of the disclosure. The method is performed by a first UE. As shown in FIG. 6a, the method for message transmission may include the following step 601a.

At step 601a, an SLPP message and/or an RSPP message is sent, in which the SLPP message and/or the RSPP message further includes a sequence number.

Since the first UE may transmit a plurality of different SLPP messages and/or RSPP messages to one second UE, in this case, when the first UE receives an ACK feedback sent by the second UE, the first UE may be unable to determine which SLPP message and/or RSPP message the ACK feedback is for. In an embodiment of the disclosure, the SLPP message and/or the RSPP message may further include the sequence number. The sequence number may correspond to the SLPP message and/or the RSPP message. When receiving the SLPP message and/or the RSPP message, the second UE obtains the sequence number corresponding to the SLPP message and/or the RSPP message by parsing the SLPP message and/or the RSPP message. Subsequently, when sending the ACK feedback to the first UE, the second UE may provide the ACK feedback for the SLPP message and/or the RSPP message based on the sequence number included in the SLPP message and/or the RSPP message. This enables the first UE, when receiving the ACK feedback sent by the second UE, to determine, based on the sequence number, which SLPP message and/or RSPP message the ACK feedback is for, and further to determine which SLPP messages and/or RSPP messages are successfully received by the second UE and which SLPP messages and/or RSPP messages are not successfully received by the second UE. The first UE may then retransmit the SLPP messages and/or the RSPP messages that are not successfully received by the second UE to the second UE. This ensures the successful transmission of the SLPP message and/or the RSPP message for the second UE, ensures the transmission stability of the SLPP message and/or the RSPP message, and thus ensures the stability of an SL positioning and/or an SL ranging.

Optionally, in an embodiment of the disclosure, "providing the ACK feedback for the SLPP message and/or the RSPP message based on the sequence number included in the SLPP message and/or the RSPP message" may include: carrying the sequence number corresponding to the SLPP message and/or the RSPP message in the ACK feedback. Thus the first UE may determine, based on the sequence number carried in the ACK feedback, which SLPP message and/or the RSPP message the ACK feedback is for.

In summary, in the method for message transmission provided in embodiments of the disclosure, the first UE sends the SLPP message and/or the RSPP message. The SLPP message and/or the RSPP message includes indication information for indicating that the ACK feedback is required for the SLPP message and/or the RSPP message. Accordingly, in the disclosure, the second UE receiving the SLPP message and/or the RSPP message is instructed to provide the ACK feedback to the first UE by including the indication information in the SLPP message and/or the RSPP message sent by the first UE. Thus, the first UE may determine, based on the ACK feedback received by the first UE, which second UE does not successfully receive the SLPP message and/or the RSPP message sent by the first UE. In this case, the first UE may retransmit the SLPP message and/or the RSPP message to the second UE that does not successfully receive the SLPP message and/or the RSPP message. This ensures the successful transmission of the SLPP message and/or the RSPP message for the second UE, ensures the transmission stability of the SLPP message and/or the RSPP message, and thus ensures the stability of the SL positioning and/or the SL ranging.

FIG. 6b is a flow chart illustrating a method for message transmission according to an embodiment of the disclosure. The method is performed by a first UE. As shown in FIG. 6b, the method for message transmission may include the following step 601b.

At step 601b, an SLPP message and/or an RSPP message is unicast to a second UE, in which the SLPP message and/or the RSPP message further includes a sequence number.

In addition, details about step 601b may be described with reference to the above embodiments.

In summary, in the method for message transmission provided in embodiments of the disclosure, the first UE sends the SLPP message and/or the RSPP message. The SLPP message and/or the RSPP message includes indication information for indicating that an ACK feedback is required for the SLPP message and/or the RSPP message. Accordingly, in the disclosure, the second UE receiving the SLPP message and/or the RSPP message is instructed to provide the ACK feedback to the first UE by including the indication information in the SLPP message and/or the RSPP message sent by the first UE. Thus, the first UE may determine, based on the ACK feedback received by the first UE, which second UE does not successfully receive the SLPP message and/or RSPP message sent by the first UE. In this case, the first UE may retransmit the SLPP message and/or the RSPP message to the second UE that does not successfully receive the SLPP message and/or the RSPP message. This ensures the successful transmission of the SLPP message and/or the RSPP message for the second UE, ensures the transmission stability of the SLPP message and/or the RSPP message, and thus ensures the stability of an SL positioning and/or an SL ranging.

FIG. 6c is a flow chart illustrating a method for message transmission according to another embodiment of the disclosure. The method is performed by a first UE. As shown in FIG. 6c, the method for message transmission may include the following step 601c.

At step 601c, an SLPP message and/or an RSPP message is groupcast to a UE group including at least one second UE, in which the SLPP message and/or the RSPP message further includes a sequence number.

In addition, details about step 601c may be described with reference to the above embodiments.

In summary, in the method for message transmission provided in embodiments of the disclosure, the first UE sends the SLPP message and/or the RSPP message. The SLPP message and/or the RSPP message includes indication information for indicating that an ACK feedback is required for the SLPP message and/or the RSPP message. Accordingly, in the disclosure, the second UE receiving the SLPP message and/or the RSPP message is instructed to provide the ACK feedback to the first UE by including the indication information in the SLPP message and/or the RSPP message sent by the first UE. Thus, the first UE may determine, based on the ACK feedback received by the first UE, which second UE does not successfully receive the SLPP message and/or the RSPP message sent by the first UE. In this case, the first UE may retransmit the SLPP message and/or the RSPP message to the second UE that does not successfully receive the SLPP message and/or the RSPP message. This ensures the successful transmission of the SLPP message and/or the RSPP message for the second UE, ensures the transmission stability of the SLPP message and/or the RSPP message, and thus ensures the stability of an SL positioning and/or an SL ranging.

FIG. 6d is a flow chart illustrating a method for message transmission according to an embodiment of the disclosure. The method is performed by a first UE. As shown in FIG. 6d, the method for message transmission may include the following step 601d.

At step 601d, an SLPP message and/or an RSPP message is broadcast, in which the SLPP message and/or the RSPP message further includes a sequence number.

In addition, details about step 601d may be described with reference to the above embodiments.

In summary, in the method for message transmission provided in embodiments of the disclosure, the first UE sends the SLPP message and/or the RSPP message. The SLPP message and/or the RSPP message includes indication information for indicating that an ACK feedback is required for the SLPP message and/or the RSPP message. Accordingly, in the disclosure, the second UE receiving the SLPP message and/or the RSPP message is instructed to provide the ACK feedback to the first UE by including the indication information in the SLPP message and/or the RSPP message sent by the first UE. Thus, the first UE may determine, based on the ACK feedback received by the first UE, which second UE does not successfully receive the SLPP message and/or RSPP message sent by the first UE. In this case, the first UE may retransmit the SLPP message and/or the RSPP message to the second UE that does not successfully receive the SLPP message and/or the RSPP message. This ensures the successful transmission of the SLPP message and/or the RSPP message for the second UE, ensures the transmission stability of the SLPP message and/or the RSPP message, and thus ensures the stability of an SL positioning and/or an SL ranging.

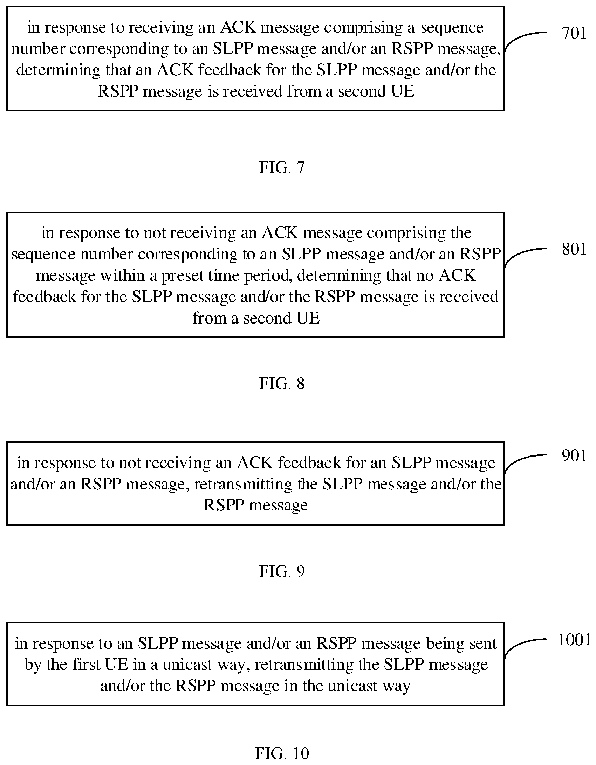

FIG. 7 is a flow chart illustrating a method for message transmission according to an embodiment of the disclosure. The method is performed by a first UE.As shown in FIG. 7, the method for message transmission may include the following step 701.

At step 701, in response to receiving an ACK message including a sequence number corresponding to an SLPP message and/or an RSPP message, it is determined that an ACK feedback for the SLPP message and/or the RSPP message is received from a second UE.

In addition, details about step 701 may be described with reference to the above embodiments.

In summary, in the method for message transmission provided in embodiments of the disclosure, the first UE sends the SLPP message and/or the RSPP message. The SLPP message and/or the RSPP message includes indication information for indicating that the ACK feedback is required for the SLPP message and/or the RSPP message. Accordingly, in the disclosure, the second UE receiving the SLPP message and/or the RSPP message is instructed to provide the ACK feedback to the first UE by including the indication information in the SLPP message and/or the RSPP message sent by the first UE. Thus, the first UE may determine, based on the ACK feedback received by the first UE, which second UE does not successfully receive the SLPP message and/or RSPP message sent by the first UE. In this case, the first UE may retransmit the SLPP message and/or the RSPP message to the second UE that does not successfully receive the SLPP message and/or the RSPP message. This ensures the successful transmission of the SLPP message and/or the RSPP message for the second UE, ensures the transmission stability of the SLPP message and/or the RSPP message, and thus ensures the stability of an SL positioning and/or an SL ranging.

FIG. 8 is a flow chart illustrating a method for message transmission according to an embodiment of the disclosure. The method is performed by a first UE. As shown in FIG. 8, the method for message transmission may include the following step 801.

At step 801, in response to not receiving an ACK message including a sequence number corresponding to an SLPP message and/or an RSPP message within a preset time period, it is determined that no ACK feedback for the SLPP message and/or the RSPP message is received from a second UE.

In an embodiment of the disclosure, the preset time period may be agreed by a protocol, or may be configured by a network device, or may be configured by preconfiguration information, or may be autonomously determined by the first UE based on the implementation.

In addition, details about step 801 may be described with reference to the above embodiments.

In summary, in the method for message transmission provided in embodiments of the disclosure, the first UE sends the SLPP message and/or the RSPP message. The SLPP message and/or the RSPP message includes indication information for indicating that the ACK feedback is required for the SLPP message and/or the RSPP message. Accordingly, in the disclosure, the second UE receiving the SLPP message and/or the RSPP message is instructed to provide the ACK feedback to the first UE by including the indication information in the SLPP message and/or the RSPP message sent by the first UE. Thus, the first UE may determine, based on the ACK feedback received by the first UE, which second UE does not successfully receive the SLPP message and/or RSPP message sent by the first UE. In this case, the first UE may retransmit the SLPP message and/or the RSPP message to the second UE that does not successfully receive the SLPP message and/or the RSPP message. This ensures the successful transmission of the SLPP message and/or the RSPP message for the second UE, ensures the transmission stability of the SLPP message and/or the RSPP message, and thus ensures the stability of an SL positioning and/or an SL ranging.

FIG. 9 is a flow chart illustrating a method for message transmission according to an embodiment of the disclosure. The method is performed by a first UE. As shown in FIG. 9, the method for message transmission may include the following step 901.

At step 901, in response to not receiving an ACK feedback for an SLPP message and/or an RSPP message, the SLPP message and/or the RSPP message is retransmitted.

In addition, details about step 901 may be described with reference to the above embodiments.

In summary, in the method for message transmission provided in embodiments of the disclosure, the first UE sends the SLPP message and/or the RSPP message. The SLPP message and/or the RSPP message includes indication information for indicating that the ACK feedback is required for the SLPP message and/or the RSPP message. Accordingly, in the disclosure, the second UE receiving the SLPP message and/or the RSPP message is instructed to provide the ACK feedback to the first UE by including the indication information in the SLPP message and/or the RSPP message sent by the first UE. Thus, the first UE may determine, based on the ACK feedback received by the first UE, which second UE does not successfully receive the SLPP message and/or RSPP message sent by the first UE. In this case, the first UE may retransmit the SLPP message and/or the RSPP message to the second UE that does not successfully receive the SLPP message and/or the RSPP message. This ensures the successful transmission of the SLPP message and/or the RSPP message for the second UE, ensures the transmission stability of the SLPP message and/or the RSPP message, and thus ensures the stability of an SL positioning and/or an SL ranging.

FIG. 10 is a flow chart illustrating a method for message transmission according to an embodiment of the disclosure. The method is performed by a first UE. As shown in FIG. 10, the method for message transmission may include the following step 1001.

At step 1001, in response to an SLPP message and/or an RSPP message being sent by the first UE in a unicast way, the SLPP message and/or the RSPP message is retransmitted in the unicast way.

In addition, details about step 1001 may be described with reference to the above embodiments.

In summary, in the method for message transmission provided in embodiments of the disclosure, the first UE sends the SLPP message and/or the RSPP message. The SLPP message and/or the RSPP message includes indication information for indicating that an ACK feedback is required for the SLPP message and/or the RSPP message. Accordingly, in the disclosure, the second UE receiving the SLPP message and/or the RSPP message is instructed to provide the ACK feedback to the first UE by including the indication information in the SLPP message and/or the RSPP message sent by the first UE. Thus, the first UE may determine, based on the ACK feedback received by the first UE, which second UE does not successfully receive the SLPP message and/or RSPP message sent by the first UE. In this case, the first UE may retransmit the SLPP message and/or the RSPP message to the second UE that does not successfully receive the SLPP message and/or the RSPP message. This ensures the successful transmission of the SLPP message and/or the RSPP message for the second UE, ensures the transmission stability of the SLPP message and/or the RSPP message, and thus ensures the stability of an SL positioning and/or an SL ranging.

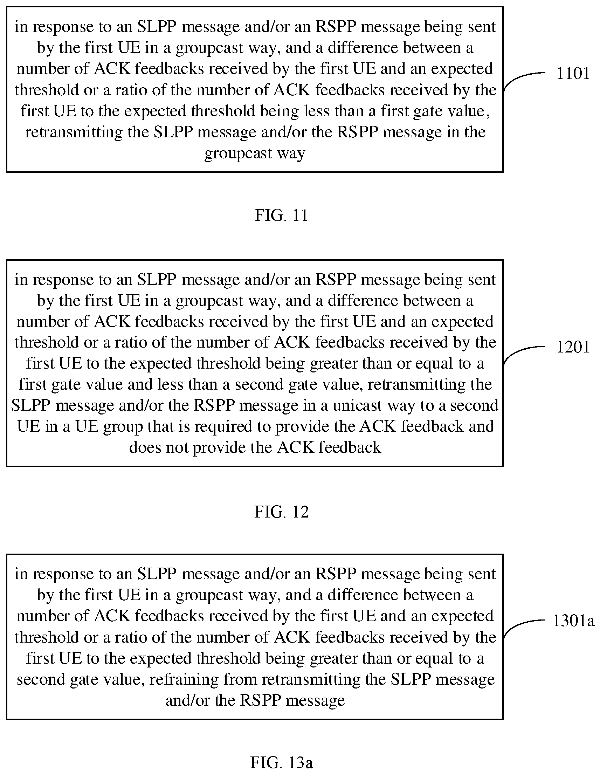

FIG. 11 is a flow chart illustrating a method for message transmission according to an embodiment of the disclosure. The method is performed by a first UE. As shown in FIG. 11, the method for message transmission may include the following step 1101.

At step 1101, in response to an SLPP message and/or an RSPP message being sent by the first UE in a groupcast way, and a difference between a number of ACK feedbacks received by the first UE and an expected threshold or a ratio of the number of ACK feedbacks received by the first UE to the expected threshold being less than a first gate value, the SLPP message and/or the RSPP message is retransmitted in the groupcast way.

In an embodiment of the disclosure, "the number of ACK feedbacks received by the first UE" may be: the number of ACK feedbacks received by the first UE in the current groupcast transmission.

Further, in an embodiment of the disclosure, the expected threshold may be determined by the first UE based on a capability (e.g., a ranging capability and/or a positioning capability) of each second UE in a UE group. As shown in the above, when the first UE groupcasts the SLPP message and/or the RSPP message to the UE group, it indicates that the first UE requests to perform a group ranging service and/or a group positioning service with at least one second UE in the UE group. However, since different second UEs have different capabilities, different second UEs may support different positioning algorithms and different ranging algorithms. If the positioning algorithm and/or the ranging algorithm supported by a part of second UEs in the UE group is different from the positioning algorithm and/or the ranging algorithm corresponding to the ranging service and/or the positioning service requested to be performed by the first UE, the part of second UEs may be unable to participate in the ranging service and/or the positioning service requested to be performed by the first UE.That is, only some of the second UEs in the UE group may be capable of performing the ranging service and/or the positioning service with the first UE. The expected threshold may be a number of second UEs in the UE group that are capable of performing the ranging service and/or the positioning service with the first UE.

Alternatively, in an embodiment of the disclosure, the expected threshold may be determined by the first UE based on a number of second UEs in the UE group that are capable of normally interacting and communicating with the first UE. In an embodiment of the disclosure, when the first UE requests to perform the group ranging service and/or the group positioning service with the at least one second UE in the UE group, the first UE establishes a session with the second UE to normally interact with the second UE via the session. If a second UE does not respond a message within the session to the first UE for a long time, it indicates that the session between the second UE and the first UE is terminated or suspended, and the second UE and the first UE are incapable of performing a normal interaction related to the ranging service and/or the positioning service. In this case, the first UE marks the second UE as an inactive state or an unreachable state. The expected threshold may be a number of second UEs in the UE group that are not marked as the inactive state or the unreachable state. That is, the expected threshold may be the second UEs in the UE group that are capable of performing the normal interaction related to the ranging service and/or the positioning service with the first UE.

Further, in an embodiment of the disclosure, when the difference between the number of ACK feedbacks received by the first UE and the expected threshold or the ratio of the number of ACK feedbacks received by the first UE to the expected threshold is less than the first gate value, it indicates that there is a large number of second UEs in the current UE group that do not receive the SLPP message and/or the RSPP message. In this case, the first UE may retransmit the SLPP message and/or the RSPP message in the groupcast way to ensure a successful transmission for the SLPP message and/or the RSPP message.

In addition, details about step 1101 may be described with reference to the above embodiments.

In summary, in the method for message transmission provided in embodiments of the disclosure, the first UE sends the SLPP message and/or the RSPP message. The SLPP message and/or the RSPP message includes indication information for indicating that the ACK feedback is required for the SLPP message and/or the RSPP message. Accordingly, in the disclosure, the second UE receiving the SLPP message and/or the RSPP message is instructed to provide the ACK feedback to the first UE by including the indication information in the SLPP message and/or the RSPP message sent by the first UE. Thus, the first UE may determine, based on the ACK feedback received by the first UE, which second UE does not successfully receive the SLPP message and/or RSPP message sent by the first UE. In this case, the first UE may retransmit the SLPP message and/or the RSPP message to the second UE that does not successfully receive the SLPP message and/or the RSPP message. This ensures the successful transmission of the SLPP message and/or the RSPP message for the second UE, ensures the transmission stability of the SLPP message and/or the RSPP message, and thus ensures the stability of an SL positioning and/or an SL ranging.

FIG. 12 is a flow chart illustrating a method for message transmission according to an embodiment of the disclosure. The method is performed by a first UE. As shown in FIG. 12, the method for message transmission may include the following step 1201.

At step 1201, in response to an SLPP message and/or an RSPP message being sent by the first UE in a groupcast way, and a difference between a number of ACK feedbacks received by the first UE and an expected threshold or a ratio of the number of ACK feedbacks received by the first UE to the expected threshold being greater than or equal to a first gate value and less than a second gate value, the SLPP message and/or the RSPP message is retransmitted in a unicast way to a second UE in a UE group that is required to provide the ACK feedback and does not provide the ACK feedback.

In this case, "the number of ACK feedbacks received by the first UE" may be: the number of ACK feedbacks received by the first UE in the current groupcast transmission.

In an embodiment of the disclosure, when the difference between the number of ACK feedbacks received by the first UE and the expected threshold or the ratio of the number of ACK feedbacks received by the first UE to the expected threshold is greater than or equal to the first gate value and less than the second gate value, it indicates that there is a small number of second UEs in the current UE group that do not receive the SLPP message and/or the RSPP message. In this case, the first UE may retransmit the SLPP message and/or the RSPP message in the unicast way only to the second UE in the UE group that is required to provide the ACK feedback and does not provide the ACK feedback. The second UE that is required to provide the ACK feedback may be a second UE that is capable of participating in a ranging service and/or a positioning service requested by the first UE, or may be a second UE that is not marked as an inactive state or an unreachable state.

It should be noted that the first gate value may be configured to the first UE by a network device, or may be autonomously determined by the first UE, or may be preconfigured. The second gate value, the third gate value, the first threshold, the second threshold, and the third threshold mentioned in the following embodiments may also be configured to the first UE by the network device, or may be autonomously determined by the first UE, or may be preconfigured. The different values may be the same or different.

In addition, details about step 1201 may be described with reference to the above embodiments.

In summary, in the method for message transmission provided in embodiments of the disclosure, the first UE sends the SLPP message and/or the RSPP message. The SLPP message and/or the RSPP message includes indication information for indicating that the ACK feedback is required for the SLPP message and/or the RSPP message. Accordingly, in the disclosure, the second UE receiving the SLPP message and/or the RSPP message is instructed to provide the ACK feedback to the first UE by including the indication information in the SLPP message and/or the RSPP message sent by the first UE. Thus, the first UE may determine, based on the ACK feedback received by the first UE, which second UE does not successfully receive the SLPP message and/or RSPP message sent by the first UE. In this case, the first UE may retransmit the SLPP message and/or the RSPP message to the second UE that does not successfully receive the SLPP message and/or the RSPP message. This ensures the successful transmission of the SLPP message and/or the RSPP message for the second UE, ensures the transmission stability of the SLPP message and/or the RSPP message, and thus ensures the stability of an SL positioning and/or an SL ranging.

FIG. 13a is a flow chart illustrating a method for message transmission according to an embodiment of the disclosure. The method is performed by a first UE. As shown in FIG. 13a, the method for message transmission may include the following step 1301a.

At step 1301a, in response to an SLPP message and/or an RSPP message being sent by the first UE in a groupcast way, and a difference between a number of ACK feedbacks received by the first UE and an expected threshold or a ratio of the number of ACK feedbacks received by the first UE to the expected threshold being greater than or equal to a second gate value, the SLPP message and/or the RSPP message is not retransmitted.

In this case, "the number of ACK feedbacks received by the first UE" may be: the number of ACK feedbacks received by the first UE in the current groupcast transmission.

In an embodiment of the disclosure, when the difference between the number of ACK feedbacks received by the first UE and the expected threshold or the ratio of the number of ACK feedbacks received by the first UE to the expected threshold is greater than or equal to the second gate value, it indicates that there is a small number of second UEs in the current UE group that do not receive the SLPP message and/or the RSPP message. Thus, an impact on a positioning service and/or a ranging service requested to be performed by the first UE is negligible, and in this case, retransmitting the SLPP message and/or the RSPP message may be refrained.

In addition, details about step 1301a may be described with reference to the above embodiments.

In summary, in the method for message transmission provided in embodiments of the disclosure, the first UE sends the SLPP message and/or the RSPP message. The SLPP message and/or the RSPP message includes indication information for indicating that the ACK feedback is required for the SLPP message and/or the RSPP message. Accordingly, in the disclosure, the second UE receiving the SLPP message and/or the RSPP message is instructed to provide the ACK feedback to the first UE by including the indication information in the SLPP message and/or the RSPP message sent by the first UE. Thus, the first UE may determine, based on the ACK feedback received by the first UE, which second UE does not successfully receive the SLPP message and/or RSPP message sent by the first UE. In this case, the first UE may retransmit the SLPP message and/or the RSPP message to the second UE that does not successfully receive the SLPP message and/or the RSPP message. This ensures the successful transmission of the SLPP message and/or the RSPP message for the second UE, ensures the transmission stability of the SLPP message and/or the RSPP message, and thus ensures the stability of an SL positioning and/or an SL ranging.

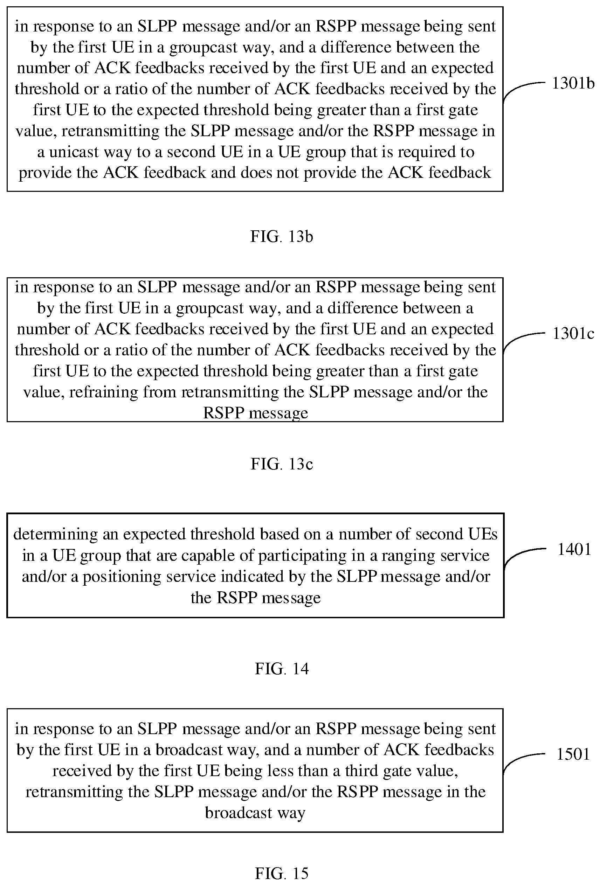

FIG. 13b is a flow chart illustrating a method for message transmission according to an embodiment of the disclosure. The method is performed by a first UE. As shown in FIG. 13b, the method for message transmission may include the following step 1301b.

At step 1301b, in response to an SLPP message and/or an RSPP message being sent by the first UE in a groupcast way, and a difference between a number of ACK feedbacks received by the first UE and an expected threshold or a ratio of the number of ACK feedbacks received by the first UE to the expected threshold being greater than a first gate value, the SLPP message and/or the RSPP message is retransmitted in a unicast way to a second UE in a UE group that is required to provide the ACK feedback and does not provide the ACK feedback.

In this case, "the number of ACK feedbacks received by the first UE" may be: the number of ACK feedbacks received by the first UE in the current groupcast transmission.

In an embodiment of the disclosure, when the difference between the number of ACK feedbacks received by the first UE and the expected threshold or the ratio of the number of ACK feedbacks received by the first UE to the expected threshold is greater than the first gate value, it indicates that there is a small number of second UEs in the current UE group that do not receive the SLPP message and/or the RSPP message. In this case, the first UE may retransmit the SLPP message and/or the RSPP message in the unicast way only to the second UE in the UE group that is required to provide the ACK feedback and does not provide the ACK feedback. The second UE that is required to provide the ACK feedback may be a second UE that is capable of participating in a ranging service and/or a positioning service requested by the first UE, or may be a second UE that is not marked as an inactive state or an unreachable state.

In addition, details about step 1301b may be described with reference to the above embodiments.

In summary, in the method for message transmission provided in embodiments of the disclosure, the first UE sends the SLPP message and/or the RSPP message. The SLPP message and/or the RSPP message includes indication information for indicating that the ACK feedback is required for the SLPP message and/or the RSPP message. Accordingly, in the disclosure, the second UE receiving the SLPP message and/or the RSPP message is instructed to provide the ACK feedback to the first UE by including the indication information in the SLPP message and/or the RSPP message sent by the first UE. Thus, the first UE may determine, based on the ACK feedback received by the first UE, which second UE does not successfully receive the SLPP message and/or RSPP message sent by the first UE. In this case, the first UE may retransmit the SLPP message and/or the RSPP message to the second UE that does not successfully receive the SLPP message and/or the RSPP message. This ensures the successful transmission of the SLPP message and/or the RSPP message for the second UE, ensures the transmission stability of the SLPP message and/or the RSPP message, and thus ensures the stability of an SL positioning and/or an SL ranging.

FIG. 13c is a flow chart illustrating a method for message transmission according to an embodiment of the disclosure. The method is performed by a first UE. As shown in FIG. 13c, the method for message transmission may include the following step 1301c.

At step 1301c, in response to an SLPP message and/or an RSPP message being sent by the first UE in a groupcast way, and a difference between a number of ACK feedbacks received by the first UE and an expected threshold or a ratio of the number of ACK feedbacks received by the first UE to the expected threshold being greater than a first gate value, the SLPP message and/or the RSPP message is not retransmitted.

In this case, "the number of ACK feedbacks received by the first UE" may be: the number of ACK feedbacks received by the first UE in the current groupcast transmission.

In an embodiment of the disclosure, when the difference between the number of ACK feedbacks received by the first UE and the expected threshold or the ratio of the number of ACK feedbacks received by the first UE to the expected threshold is greater than the first gate value, it indicates that there is a large number of second UEs in the current group of UEs that receive the SLPP message and/or the RSPP message. In this case, retransmitting the SLPP message and/or the RSPP message may be refrained.

In addition, details about step 1301c may be described with reference to the above embodiments.

In summary, in the method for message transmission provided in embodiments of the disclosure, the first UE sends the SLPP message and/or the RSPP message. The SLPP message and/or the RSPP message includes indication information for indicating that the ACK feedback is required for the SLPP message and/or the RSPP message. Accordingly, in the disclosure, the second UE receiving the SLPP message and/or the RSPP message is instructed to provide the ACK feedback to the first UE by including the indication information in the SLPP message and/or the RSPP message sent by the first UE. Thus, the first UE may determine, based on the ACK feedback received by the first UE, which second UE does not successfully receive the SLPP message and/or RSPP message sent by the first UE. In this case, the first UE may retransmit the SLPP message and/or the RSPP message to the second UE that does not successfully receive the SLPP message and/or the RSPP message. This ensures the successful transmission of the SLPP message and/or the RSPP message for the second UE, ensures the transmission stability of the SLPP message and/or the RSPP message, and thus ensures the stability of an SL positioning and/or an SL ranging.

FIG. 14 is a flow chart illustrating a method for message transmission according to an embodiment of the disclosure. The method is performed by a first UE. As shown in FIG. 14, the method for message transmission may include the following step 1401.

At step 1401, an expected threshold is determined based on a number of second UEsin a UE group that are capable of participating in a ranging service and/or a positioning service indicated by an SLPP message and/or an RSPP message.

In addition, details about step 1401 may be described with reference to the above embodiments.

In summary, in the method for message transmission provided in embodiments of the disclosure, the first UE sends the SLPP message and/or the RSPP message. The SLPP message and/or the RSPP message includes indication information for indicating that an ACK feedback is required for the SLPP message and/or the RSPP message. Accordingly, in the disclosure, the second UE receiving the SLPP message and/or the RSPP message is instructed to provide the ACK feedback to the first UE by including the indication information in the SLPP message and/or the RSPP message sent by the first UE. Thus, the first UE may determine, based on the ACK feedback received by the first UE, which second UE does not successfully receive the SLPP message and/or RSPP message sent by the first UE. In this case, the first UE may retransmit the SLPP message and/or the RSPP message to the second UE that does not successfully receive the SLPP message and/or the RSPP message. This ensures the successful transmission of the SLPP message and/or the RSPP message for the second UE, ensures the transmission stability of the SLPP message and/or the RSPP message, and thus ensures the stability of an SL positioning and/or an SL ranging.

FIG. 15 is a flow chart illustrating a method for message transmission according to an embodiment of the disclosure. The method is performed by a first UE. As shown in FIG. 15, the method for message transmission may include the following step 1501.

At step 1501, in response to an SLPP message and/or an RSPP message being sent by the first UE in a broadcast way, and a number of ACK feedbacks received by the first UE being less than a third gate value, the SLPP message and/or the RSPP message is retransmitted in the broadcast way.

In this case, "the number of ACK feedbacks received by the first UE" may be: the number of ACK feedbacks received by the first UE in the current broadcast transmission.

In an embodiment of the disclosure, when the difference between the number of ACK feedbacks received by the first UE and the expected threshold or a ratio of the number of ACK feedbacks received by the first UE to the expected threshold is less than the third gate value, it indicates that there is a large number of second UEs that do not receive the SLPP message and/or the RSPP message. In this case, the first UE may retransmit the SLPP message and/or the RSPP message in the broadcast way to ensure a successful transmission for the SLPP message and/or the RSPP message.

In addition, details about step 1501 may be described with reference to the above embodiments.

In summary, in the method for message transmission provided in embodiments of the disclosure, the first UE sends the SLPP message and/or the RSPP message. The SLPP message and/or the RSPP message includes indication information for indicating that the ACK feedback is required for the SLPP message and/or the RSPP message. Accordingly, in the disclosure, the second UE receiving the SLPP message and/or the RSPP message is instructed to provide the ACK feedback to the first UE by including the indication information in the SLPP message and/or the RSPP message sent by the first UE. Thus, the first UE may determine, based on the ACK feedback received by the first UE, which second UE does not successfully receive the SLPP message and/or RSPP message sent by the first UE. In this case, the first UE may retransmit the SLPP message and/or the RSPP message to the second UE that does not successfully receive the SLPP message and/or the RSPP message. This ensures the successful transmission of the SLPP message and/or the RSPP message for the second UE, ensures the transmission stability of the SLPP message and/or the RSPP message, and thus ensures the stability of an SL positioning and/or an SL ranging.

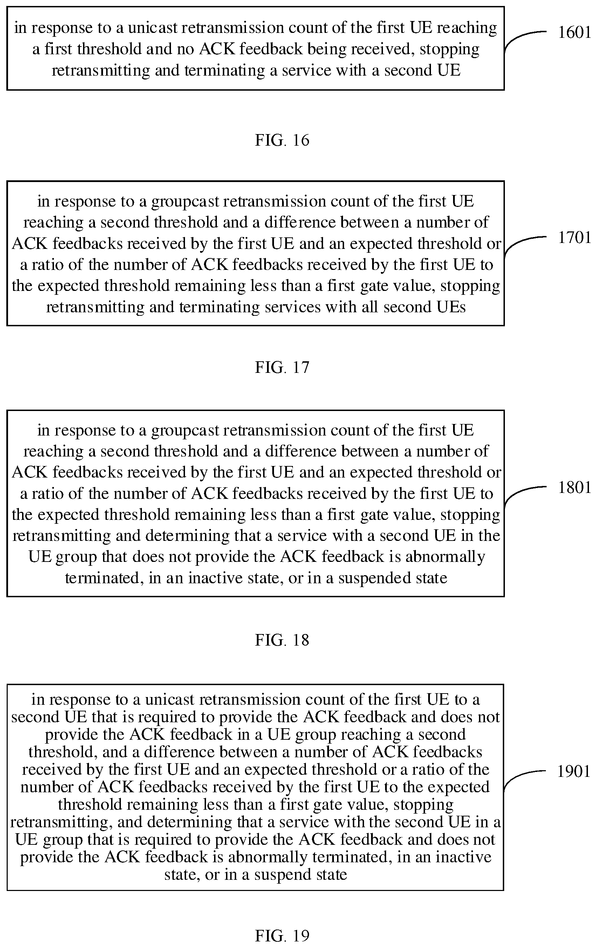

FIG. 16 is a flow chart illustrating a method for message transmission according to an embodiment of the disclosure. The method is performed by a first UE. As shown in FIG. 16, the method for message transmission may include the following step 1601.

At step 1601, in response to a unicast retransmission count of the first UE reaching a first threshold and no ACK feedback being received, the retransmitting is stopped and a service with the second UE is terminated.

Optionally, in an embodiment of the disclosure, the service may include: a ranging service procedure and/or a positioning service procedure corresponding to an SLPP message and/or an RSPP message, or a session associated with the SLPP message and/or the RSPP message.

In an embodiment of the disclosure, when the retransmission count reaches the first threshold, it indicates that the number of retransmissions is too large. In this case, if still no ACK feedback is received, it indicates that a link or a session between the first UE and the second UE is abnormal, or it indicates that the second UE is in an inactive state or an unreachable state. If the retransmission continues, a successful transmission is less likely. Thus, it is necessary to stop the retransmission and terminate the service with the second UE to avoid additional resource consumption.

It should be noted that in an embodiment of the disclosure, terminating the service with the second UE may be understood as: terminating the session associated with the SLPP message and/or the RSPP message established with the second UE. Alternatively, in another embodiment of the disclosure, in a session-less case, terminating the service with the second UE may be understood as: terminating the positioning service procedure and/or the ranging service procedure requested utilizing the RSPP message and/or the SLPP message with the second UE.

In addition, details about step 1601 may be described with reference to the above embodiments.

In summary, in the method for message transmission provided in embodiments of the disclosure, the first UE sends the SLPP message and/or the RSPP message. The SLPP message and/or the RSPP message includes indication information for indicating that the ACK feedback is required for the SLPP message and/or the RSPP message. Accordingly, in the disclosure, the second UE receiving the SLPP message and/or the RSPP message is instructed to provide the ACK feedback to the first UE by including the indication information in the SLPP message and/or the RSPP message sent by the first UE. Thus, the first UE may determine, based on the ACK feedback received by the first UE, which second UE does not successfully receive the SLPP message and/or RSPP message sent by the first UE. In this case, the first UE may retransmit the SLPP message and/or the RSPP message to the second UE that does not successfully receive the SLPP message and/or the RSPP message. This ensures the successful transmission of the SLPP message and/or the RSPP message for the second UE, ensures the transmission stability of the SLPP message and/or the RSPP message, and thus ensures the stability of an SL positioning and/or an SL ranging.

FIG. 17 is a flow chart illustrating a method for message transmission according to an embodiment of the disclosure. The method is performed by a first UE. As shown in FIG. 17, the method for message transmission may include the following step 1701.

At step 1701, in response to a groupcast retransmission count of the first UE reaching a second threshold and a difference between a number of ACK feedbacks received by the first UE and an expected threshold or a ratio of the number of ACK feedbacks received by the first UE to the expected threshold remaining less than a first gate value, stopping retransmitting and terminating services with all second UEs.

It should be noted that in an embodiment of the disclosure, "the number of ACK feedbacks received by the first UE" may be: in a historical transmission count of the SLPP message and/or the RSPP message related to the service currently requested to be performed by the first UE, the number of second UEs corresponding to the ACK feedbacks received by the first UE. That is, "the number of ACK feedbacks received by the first UE" is: in the historical transmission count of the SLPP message and/or the RSPP message related to the service currently requested to be performed by the first UE, the number of second UEs that provides the ACK feedbacks to the first UE.

In an embodiment of the disclosure, "all second UEs" may be: all second UEs that participate in a service indicated by the SLPP message and/or the RSPP message in a UE group. In the UE group, some or all of the UEs may participate in the service indicated by the SLPP message and/or the RSPP message.

Further, in an embodiment of the disclosure, the service may be: a ranging service procedure and/or a positioning service procedure corresponding to the SLPP message and/or the RSPP message, or a session associated with the SLPP message and/or the RSPP message.

It should be noted that in an embodiment of the disclosure, terminating the service with the second UE may be understood as: terminating the session associated with the SLPP message and/or the RSPP message established with the second UE. Alternatively, in another embodiment of the disclosure, in a session-less case, terminating the service with the second UE may be understood as: terminating the positioning service procedure and/or the ranging service procedure requested utilizing the RSPP message and/or the SLPP message with the second UE.

In addition, details about step 1701 may be described with reference to the above embodiments.

In summary, in the method for message transmission provided in embodiments of the disclosure, the first UE sends the SLPP message and/or the RSPP message. The SLPP message and/or the RSPP message includes indication information for indicating that the ACK feedback is required for the SLPP message and/or the RSPP message. Accordingly, in the disclosure, the second UE receiving the SLPP message and/or the RSPP message is instructed to provide the ACK feedback to the first UE by including the indication information in the SLPP message and/or the RSPP message sent by the first UE. Thus, the first UE may determine, based on the ACK feedback received by the first UE, which second UE does not successfully receive the SLPP message and/or RSPP message sent by the first UE. In this case, the first UE may retransmit the SLPP message and/or the RSPP message to the second UE that does not successfully receive the SLPP message and/or the RSPP message. This ensures the successful transmission of the SLPP message and/or the RSPP message for the second UE, ensures the transmission stability of the SLPP message and/or the RSPP message, and thus ensures the stability of an SL positioning and/or an SL ranging.

FIG. 18 is a flow chart illustrating a method for message transmission according to an embodiment of the disclosure. The method is performed by a first UE. As shown in FIG. 18, the method for message transmission may include the following step 1801.

At step 1801, in response to a groupcast retransmission count of the first UE reaching a second threshold and a difference between a number of ACK feedbacks received by the first UE and an expected threshold or a ratio of the number of ACK feedbacks received by the first UE to the expected threshold remaining less than a first gate value, retransmitting is stopped and it is determined that a service with a second UE in a UE group that does not provide the ACK feedback is abnormally terminated, in an inactive state, or in a suspended state.

It should be noted that in an embodiment of the disclosure, "the number of ACK feedbacks received by the first UE" may be: in a historical transmission count of the SLPP message and/or the RSPP message related to the service currently requested to be performed by the first UE, the number of second UEs corresponding to the ACK feedbacks received by the first UE. That is, "the number of ACK feedbacks received by the first UE" is: in the historical transmission count of the SLPP message and/or the RSPP message related to the service currently requested to be performed by the first UE, the number of second UEs that provides the ACK feedbacks to the first UE.

Optionally, in an embodiment of the disclosure, "the difference between the number of ACK feedbacks received by the first UE and the expected threshold or the ratio of the number of ACK feedbacks received by the first UE to the expected threshold remaining less than the first gate value" may be understood as: the first UE still does not receive the ACK feedbacks from some or all of the second UEs in the UE group.

Further, in an embodiment of the disclosure, the service may be: a ranging service procedure and/or a positioning service procedure corresponding to the SLPP message and/or the RSPP message, or a session associated with the SLPP message and/or the RSPP message.

It should be noted that in an embodiment of the disclosure, the service with the second UE being abnormally terminated, in an inactive state, or in a suspended state may be understood as: a session associated with the RSPP message and/or the SLPP message established with the second UE is abnormally terminated, in the inactive state, or in the suspended state. Alternatively, in another embodiment of the disclosure, in a session-less case, terminating the service with the second UE may be understood as: a positioning service procedure and/or a ranging service procedure requested utilizing the RSPP message and/or the SLPP message with the second UE is abnormally terminated, in the inactive state, or in the suspended state.

It should further be noted that services with some UEs in the UE group that are terminated, suspended, or inactive do not affect services performed by other UEs in the UE group. In this way, in an embodiment of the disclosure, when the service with the second UE in the UE group that does not provide the ACK feedback is terminated, suspended, or inactive, the ranging service and/or the positioning service performed by the other second UEs in the UE group with the first UE is not affected.

In addition, details about step 1801 may be described with reference to the above embodiments.

In summary, in the method for message transmission provided in embodiments of the disclosure, the first UE sends the SLPP message and/or the RSPP message. The SLPP message and/or the RSPP message includes indication information for indicating that the ACK feedback is required for the SLPP message and/or the RSPP message. Accordingly, in the disclosure, the second UE receiving the SLPP message and/or the RSPP message is instructed to provide the ACK feedback to the first UE by including the indication information in the SLPP message and/or the RSPP message sent by the first UE. Thus, the first UE may determine, based on the ACK feedback received by the first UE, which second UE does not successfully receive the SLPP message and/or RSPP message sent by the first UE. In this case, the first UE may retransmit the SLPP message and/or the RSPP message to the second UE that does not successfully receive the SLPP message and/or the RSPP message. This ensures the successful transmission of the SLPP message and/or the RSPP message for the second UE, ensures the transmission stability of the SLPP message and/or the RSPP message, and thus ensures the stability of an SL positioning and/or an SL ranging.

FIG. 19 is a flow chart illustrating a method for message transmission according to an embodiment of the disclosure. The method is performed by a first UE. As shown in FIG. 19, the method for message transmission may include the following step 1901.

At step 1901, in response to a unicast retransmission count of the first UE to the second UE that is required to provide the ACK feedback and does not provide the ACK feedback in a UE group reaching a second threshold, and a difference between a number of ACK feedbacks received by the first UE and an expected threshold or a ratio of the number of ACK feedbacks received by the first UE to the expected threshold remaining less than a first gate value, retransmitting is stopped and it is determined that a service with the second UE in a UE group that is required to provide the ACK feedback and does not provide the ACK feedback is abnormally terminated, in an inactive state, or in a suspend state.

It should be noted that in an embodiment of the disclosure, "the number of ACK feedbacks received by the first UE" may be: in a historical transmission count of the SLPP message and/or the RSPP message related to the service currently requested to be performed by the first UE, the number of second UEs corresponding to the ACK feedbacks received by the first UE. That is, "the number of ACK feedbacks received by the first UE" is: in the historical transmission count of the SLPP message and/or the RSPP message related to the service currently requested to be performed by the first UE, the number of second UEs that provides the ACK feedbacks to the first UE.

It should further be noted that services with some UEs in the UE group that are terminated, suspended, or inactive do not affect services performed by other UEs in the UE group. In this way, in an embodiment of the disclosure, when the service with the second UE in the UE group that does not provide the ACK feedback is terminated, suspended, or inactive, a ranging service and/or a positioning service performed by the other second UEs in the UE group with the first UE is not affected.

In addition, details about step 1901 may be described with reference to the above embodiments.

In summary, in the method for message transmission provided in embodiments of the disclosure, the first UE sends the SLPP message and/or the RSPP message. The SLPP message and/or the RSPP message includes indication information for indicating that the ACK feedback is required for the SLPP message and/or the RSPP message. Accordingly, in the disclosure, the second UE receiving the SLPP message and/or the RSPP message is instructed to provide the ACK feedback to the first UE by including the indication information in the SLPP message and/or the RSPP message sent by the first UE. Thus, the first UE may determine, based on the ACK feedback received by the first UE, which second UE does not successfully receive the SLPP message and/or RSPP message sent by the first UE. In this case, the first UE may retransmit the SLPP message and/or the RSPP message to the second UE that does not successfully receive the SLPP message and/or the RSPP message. This ensures the successful transmission of the SLPP message and/or the RSPP message for the second UE, ensures the transmission stability of the SLPP message and/or the RSPP message, and thus ensures the stability of an SL positioning and/or an SL ranging.

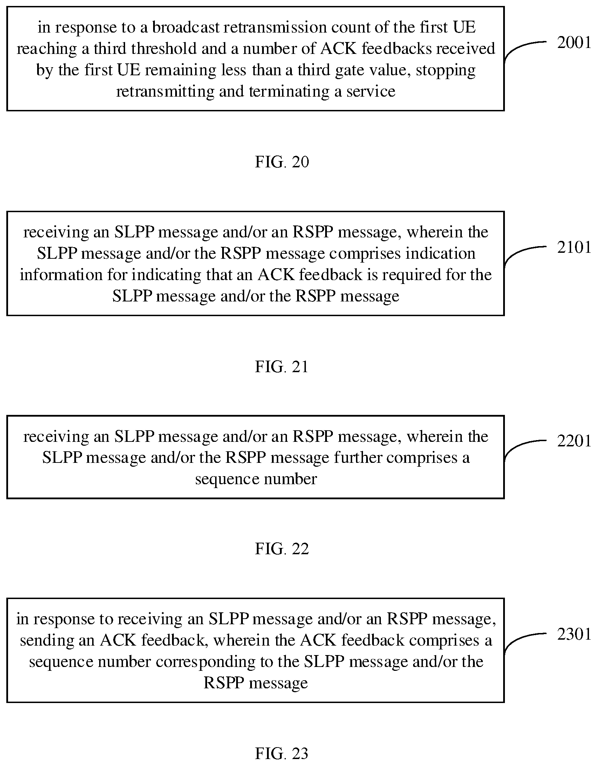

FIG. 20 is a flow chart illustrating a method for message transmission according to an embodiment of the disclosure. The method is performed by a first UE. As shown in FIG. 20, the method for message transmission may include the following step 2001.

At step 2001, in response to a broadcast retransmission count of the first UE reaching a third threshold and a number of ACK feedbacks received by the first UE remaining less than a third gate value, retransmitting is stopped and a service is terminated.

It should be noted that in an embodiment of the disclosure, "the number of ACK feedbacks received by the first UE" may be: in a historical transmission count of the SLPP message and/or the RSPP message related to the service currently requested to be performed by the first UE, the number of second UEs corresponding to the ACK feedbacks received by the first UE. That is, "the number of ACK feedbacks received by the first UE" is: in the historical transmission count of the SLPP message and/or the RSPP message related to the service currently requested to be performed by the first UE, the number of second UEs that provides the ACK feedbacks to the first UE.

In addition, details about step 2001 may be described with reference to the above embodiments.

In summary, in the method for message transmission provided in embodiments of the disclosure, the first UE sends the SLPP message and/or the RSPP message. The SLPP message and/or the RSPP message includes indication information for indicating that the ACK feedback is required for the SLPP message and/or the RSPP message. Accordingly, in the disclosure, the second UE receiving the SLPP message and/or the RSPP message is instructed to provide the ACK feedback to the first UE by including the indication information in the SLPP message and/or the RSPP message sent by the first UE. Thus, the first UE may determine, based on the ACK feedback received by the first UE, which second UE does not successfully receive the SLPP message and/or RSPP message sent by the first UE. In this case, the first UE may retransmit the SLPP message and/or the RSPP message to the second UE that does not successfully receive the SLPP message and/or the RSPP message. This ensures the successful transmission of the SLPP message and/or the RSPP message for the second UE, ensures the transmission stability of the SLPP message and/or the RSPP message, and thus ensures the stability of an SL positioning and/or an SL ranging.

FIG. 21 is a flow chart illustrating a method for message transmission according to an embodiment of the disclosure. The method is performed by a second UE. As shown in FIG. 21, the method for message transmission may include the following step 2101.

At step 2101, an SLPP message and/or an RSPP message is received, in which the SLPP message and/or the RSPP message includes indication information for indicating that an ACK feedback is required for the SLPP message and/or the RSPP message.

In addition, details about step 2101 may be described with reference to the above embodiments.

In summary, in the method for message transmission provided in embodiments of the disclosure, the second UE receives the SLPP message and/or the RSPP message. The SLPP message and/or the RSPP message includes the indication information for indicating that the ACK feedback is required for the SLPP message and/or the RSPP message. Accordingly, in the disclosure, the second UE receiving the SLPP message and/or the RSPP message is instructed to provide the ACK feedback to a first UE by including the indication information in the SLPP message and/or the RSPP message. Thus, the first UE may determine, based on the ACK feedback received by the first UE, which second UE does not successfully receive the SLPP message and/or RSPP message sent by the first UE. In this case, the first UE may retransmit the SLPP message and/or the RSPP message to the second UE that does not successfully receive the SLPP message and/or the RSPP message. This ensures the successful transmission of the SLPP message and/or the RSPP message for the second UE, ensures the transmission stability of the SLPP message and/or the RSPP message, and thus ensures the stability of an SL positioning and/or an SL ranging.

FIG. 22 is a flow chart illustrating a method for message transmission according to an embodiment of the disclosure. The method is performed by a second UE. As shown in FIG. 22, the method for message transmission may include the following step 2201.

At step 2201, an SLPP message and/or an RSPP message is received, in which the SLPP message and/or the RSPP message includes a sequence number.

In addition, details about step 2201 may be described with reference to the above embodiments.

In summary, in the method for message transmission provided in embodiments of the disclosure, the second UE receives the SLPP message and/or the RSPP message. The SLPP message and/or the RSPP message includes indication information for indicating that an ACK feedback is required for the SLPP message and/or the RSPP message. Accordingly, in the disclosure, the second UE receiving the SLPP message and/or the RSPP message is instructed to provide the ACK feedback to a first UE by including the indication information in the SLPP message and/or the RSPP message. Thus, the first UE may determine, based on the ACK feedback received by the first UE, which second UE does not successfully receive the SLPP message and/or RSPP message sent by the first UE. In this case, the first UE may retransmit the SLPP message and/or the RSPP message to the second UE that does not successfully receive the SLPP message and/or the RSPP message. This ensures the successful transmission of the SLPP message and/or the RSPP message for the second UE, ensures the transmission stability of the SLPP message and/or the RSPP message, and thus ensures the stability of an SL positioning and/or an SL ranging.

FIG. 23 is a flow chart illustrating a method for message transmission according to an embodiment of the disclosure. The method is performed by a second UE. As shown in FIG. 23, the method for message transmission may include the following step 2301.

At step 2301, in response to receiving an SLPP message and/or an RSPP message, an ACK feedback is sent, in which the ACK feedback includes a sequence number corresponding to the SLPP message and/or the RSPP message.

In addition, details about step 2301 may be described with reference to the above embodiments.

In summary, in the method for message transmission provided in embodiments of the disclosure, the second UE receives the SLPP message and/or the RSPP message. The SLPP message and/or the RSPP message includes indication information for indicating that the ACK feedback is required for the SLPP message and/or the RSPP message. Accordingly, in the disclosure, the second UE receiving the SLPP message and/or the RSPP message is instructed to provide the ACK feedback to a first UE by including the indication information in the SLPP message and/or the RSPP message. Thus, the first UE may determine, based on the ACK feedback received by the first UE, which second UE does not successfully receive the SLPP messages and/or RSPP messages sent by the first UE. In this case, the first UE may retransmit the SLPP message and/or the RSPP message to the second UE that does not successfully receive the SLPP message and/or the RSPP message. This ensures the successful transmission of the SLPP message and/or the RSPP message for the second UE, ensures the transmission stability of the SLPP message and/or the RSPP message, and thus ensures the stability of an SL positioning and/or an SL ranging.

It should be noted that in the disclosure, the "greater than" and the "greater than or equal to" mentioned in the above contents may be replaced with each other without contradiction, and the "less than" and the "less than or equal to" mentioned in the above contents may also be replaced with each other without contradiction. Further, "the difference between the number of ACK feedbacks received by the first UE and the expected threshold or the ratio of the number of ACK feedbacks received by the first UE to the expected threshold being less than" and "the difference between the number of ACK feedbacks not received by the first UE and the expected threshold or the ratio of the number of ACK feedbacks not received by the first UE to the expected threshold being greater than" mentioned in the above contents have the same meanings, and may be replaced with each other, and "the difference between the number of ACK feedbacks received by the first UE and the expected threshold or the ratio of the number of ACK feedbacks received by the first UE to the expected threshold being greater than" and "the difference between the number of ACK feedbacks not received by the first UE and the expected threshold or the ratio of the number of ACK feedbacks not received by the first UE to the expected threshold being less than" mentioned in the above contents have the same meanings, and may be replaced with each other.

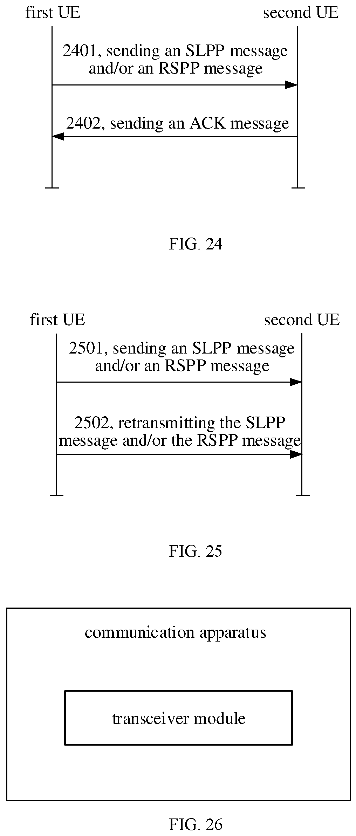

FIG. 24 is a schematic diagram illustrating interaction of a method for message transmission according to an embodiment of the disclosure. As shown in FIG. 24, the method for message transmission may include the following steps 2401 to 2402.

At step 2401, a first UE transmits an SLPP message and/or an RSPP message to a second UE.

The SLPP message and/or the RSPP message includes indication information for indicating that an ACK feedback is required for the SLPP message and/or the RSPP message.

The SLPP message and/or the RSPP message further includes a sequence number.

At step 2402, the second UE sends an ACK message to the first UE.

In addition, details about steps 2401 to 2402 may be described with reference to the above embodiments.

FIG. 25 is a schematic diagram illustrating interaction of a method for message transmission according to an embodiment of the disclosure. As shown in FIG. 25, the method for message transmission may include the following steps 2501 to 2502.

At step 2501, a first UE transmits an SLPP message and/or an RSPP message to a second UE.

The SLPP message and/or the RSPP message includes indication information for indicating that an ACK feedback is required for the SLPP message and/or the RSPP message.

The SLPP message and/or the RSPP message further includes a sequence number.

At step 2502, the first UE retransmits the SLPP message and/or the RSPP message to the second UE.

In addition, details about steps 2501 to 2502 may be described with reference to the above embodiments.

The following is a description of specific examples of the method for message transmission of the disclosure described above.

UE A (i.e., the first UE described above) includes a sequence number in a sent SLPP and/or a sent RSPP message and further indicates that an ACK feedback is required. UE B (i.e., the second UE described above) sends the ACK feedback when receiving the SLPP message and/or the RSPP message that includes an indication that the ACK feedback is required.

In an embodiment, a groupcast message or a unicast message sent by a UE contains a sequence number X, and indicates that an ACK feedback is required. When a group member UE in a UE group or a unicast receiving UE receives the message, the group member UE or the unicast receiving UE is required to provide an ACK feedback for the groupcast message or the unicast message with the sequence number X.

In example 1: the ACK feedback is supported only for a unicast sending.

In example 2: the ACK feedback is supported or not supported for a groupcast sending.

In example 3: the ACK feedback is supported or not supported for a broadcast sending.

In example 4: after sending the SLPP message and/or the RSPP message, if no ACK feedback is received within a preset time period, the UE A retransmits the message.

In an example embodiment, the preset time period may be agreed by a protocol, or may be configured by preconfiguration information, or may be determined by the UE based on the implementation.

In example 4.1: For a groupcast sending message that requires the ACK feedback, if the UE A does not receive any ACK feedback or only receives ACK feedbacks from some UEs in the UE group, there are following ways for retransmitting.

In a first way: if a difference between a number of ACK feedbacks not received and an expected number or a ratio of the number of ACK feedbacks not received to the expected number is greater than a certain gate value (or the difference between the number of ACK feedbacks received and the expected number or the ratio of the number of ACK feedbacks received to the expected number is less than the certain gate value), the UE A may retransmit the message in a groupcast way.

In an embodiment: the expected number may be determined in advance by the sending UE A. The UE A, when expecting which UEs in the UE group may provide feedback, may consider whether a UE needs to receive the message (e.g., the UE does not have the ability to respond to a relevant message), or whether the UE is currently in an inactive state within the session (e.g., if the UE is unable to respond to the message within the session, the UE A marks the UE as an inactive state or an unreachable state, or marks the session of the UE as terminated or suspend), and etc.

In a second way: if the difference between the number of ACK feedbacks not received and the expected number or the ratio of the number of ACK feedbacks not received to the expected number is less than the certain gate value (or the difference between the number of ACK feedbacks received and the expected number or the ratio of the number of ACK feedbacks received to the expected number is greater than the certain gate value), the UE A may send the message in a unicast way to the UE that is required to provide the feedback and does not provide the feedback.

In a third way: if the difference between the number of ACK feedbacks not received and the expected number or the ratio of the number of ACK feedbacks not received to the expected number is less than the certain gate value (or the difference between the number of ACK feedbacks received and the expected number or the ratio of the number of ACK feedbacks received to the expected number is greater than the certain gate value), the UE A may refrain from retransmitting the message.

If there are a number of ACK feedbacks not received, the UE may determine whether to retransmit in the unicast way or in the groupcast way based on the number of ACK feedbacks received. For example, if no ACK feedback is received, the UE may retransmit the message in the groupcast way. If only one ACK feedback is not received, the UE may retransmit the message in the unicast way to the UE that does not provide the ACK feedback. A threshold may be set for the number of ACK feedbacks to be received. If the number of ACK feedbacks received is less than the threshold, the message is transmit in the groupcast way. If the number of ACK feedbacks received is greater than the threshold, the message is transmit in the unicast way.

In example 4.2: for a unicast session, if no ACK feedback is received after a certain number of retransmissions of a message sent by the UE A, the UE A terminates all activities of the session.

In example 4.3: for a groupcast session, if a multicast message sent by the UE A is retransmitted for a certain number of times, and the number of ACK feedbacks not received is less than a certain threshold compared to the expected number, the UE A terminates all the activities of the session.

In example 4.3.1: for the groupcast session, if a multicast message sent by the UE A is retransmitted for a certain number of times, and still no ACK feedback is received from some or all of the UEs, the UE A determines that the session of the UEs that do not provide the ACK feedback is abnormally terminated, in an inactive state, or in a suspended state.

In an example embodiment: the session of part of the UEsin the UE group being terminated, in the inactive state, or in the suspended state does not affect activities of the other UEs within the session.

In example 4.4: for the groupcast session, if a unicast message sent by UE A is retransmitted for a certain number of times, and the number of ACK feedbacks not received is less than the certain threshold compared with the expected number, the UE A determines that a session of the UE is abnormally terminated, in the inactive state, or in the suspended state
In example 4.5: for a message sent in a broadcast way, if the number of ACK feedbacks received by the UE A is less than the certain threshold, the UE retransmits the message.

In example 4.5.1: for the message sent in the broadcast way, if a number of retransmissions performed by the UE A reaches the certain threshold, the UE stops the retransmission and terminates a broadcast session.

FIG. 26 is a block diagram illustrating a communication apparatus according to an embodiment of the disclosure. As shown in FIG. 26, the apparatus may include a transceiver module.

The transceiver module is configured to send an SLPP message and/or an RSPP message, in which the SLPP message and/or the RSPP message includes indication information for indicating that an ACK feedback is required for the SLPP message and/or the RSPP message.

In summary, in the communication apparatus provided in embodiments of the disclosure, a first UE sends the SLPP message and/or the RSPP message. The SLPP message and/or the RSPP message includes the indication information for indicating that the ACK feedback is required for the SLPP message and/or the RSPP message. Accordingly, in the disclosure, the second UE receiving the SLPP message and/or the RSPP message is instructed to provide the ACK feedback to the first UE by including the indication information in the SLPP message and/or the RSPP message sent by the first UE. Thus, the first UE may determine, based on the ACK feedback received by the first UE, which second UE does not successfully receive the SLPP messages and/or RSPP messages sent by the first UE. In this case, the first UE may retransmit the SLPP message and/or the RSPP message to the second UE that does not successfully receive the SLPP message and/or the RSPP message. This ensures the successful transmission of the SLPP message and/or the RSPP message for the second UE, ensures the transmission stability of the SLPP message and/or the RSPP message, and thus ensures the stability of the SL positioning and/or the SL ranging.

Optionally, in an embodiment of the disclosure, the transceiver module is further configured to: unicast the SLPP message and/or the RSPP message to a second UE; groupcast the SLPP message and/or the RSPP message to a UE group including at least one second UE; or broadcast the SLPP message and/or the RSPP message.

Optionally, in an embodiment of the disclosure, the SLPP message and/or the RSPP message further includes a sequence number.

The apparatus is further configured to: in response to receiving an ACK message including a sequence number corresponding to the SLPP message and/or the RSPP message, determine that an ACK feedback for the SLPP message and/or the RSPP message is received from the second UE; and in response to not receiving an ACK message including the sequence number corresponding to the SLPP message and/or the RSPP message within a preset time period, determine that no ACK feedback for the SLPP message and/or the RSPP message is received from the second UE.

Optionally, in an embodiment of the disclosure, the apparatus is further configured to, in response to not receiving the ACK feedback for the SLPP message and/or the RSPP message, retransmit the SLPP message and/or the RSPP message.

Optionally, in an embodiment of the disclosure, in response to the SLPP message and/or the RSPP message being sent by the first UE in a unicast way, the apparatus is further configured to retransmit the SLPP message and/or the RSPP message in the unicast way.

Optionally, in an embodiment of the disclosure, in response to the SLPP message and/or the RSPP message being sent by the first UE in a groupcast way, the apparatus is further configured to: in response to a difference between a number of ACK feedbacks received by the first UE and an expected threshold or a ratio of the number of ACK feedbacks received by the first UE to the expected threshold being less than a first gate value, retransmit the SLPP message and/or the RSPP message in the groupcast way; in response to the difference between the number of ACK feedbacks received by the first UE and the expected threshold or the ratio of the number of ACK feedbacks received by the first UE to the expected threshold being greater than or equal to the first gate value and less than a second gate value, retransmit the SLPP message and/or the RSPP message in a unicast way to a second UE in a UE group that is required to provide the ACK feedback and does not provide the ACK feedback; or in response to the difference between the number of ACK feedbacks received by the first UE and the expected threshold or the ratio of the number of ACK feedbacks received by the first UE to the expected threshold being greater than the first gate value, retransmit the SLPP message and/or the RSPP message in the unicast way to the second UE in the UE group that is required to provide the ACK feedback and does not provide the ACK feedback.

Optionally, in an embodiment of the disclosure, in response to the SLPP message and/or the RSPP message being sent by the first UE in the groupcast way, the apparatus is further configured to: in response to the difference between the number of ACK feedbacks received by the first UE and the expected threshold or the ratio of the number of ACK feedbacks received by the first UE to the expected threshold being greater than or equal to the second gate value, refrain from retransmitting the SLPP message and/or the RSPP message; or in response to the difference between the number of ACK feedbacks received by the first UE and the expected threshold or the ratio of the number of ACK feedbacks received by the first UE to the expected threshold being greater than the first gate value, refrain from retransmitting the SLPP message and/or the RSPP message.

Optionally, in an embodiment of the disclosure, the apparatus is further configured to determine the expected threshold based on a number of second UEs in the UE group that are capable of participating in a service indicated by the SLPP message and/or the RSPP message.

Optionally, in an embodiment of the disclosure, in response to the SLPP message and/or the RSPP message being sent by the first UE in a broadcast way, the apparatus is further configured to, in response to a number of ACK feedbacks received by the first UE being less than a third gate value, retransmit the SLPP message and/or the RSPP message in the broadcast way.

Optionally, in an embodiment of the disclosure, the apparatus is further configured to, in response to a unicast retransmission count of the first UE reaching a first threshold and no ACK feedback being received, stop the retransmitting and terminate a service with the second UE.

Optionally, in an embodiment of the disclosure, the apparatus is further configured to, in response to a groupcast retransmission count of the first UE reaching a second threshold and the difference between the number of ACK feedbacks received by the first UE and the expected threshold or the ratio of the number of ACK feedbacks received by the first UE to the expected threshold remaining less than the first gate value, stop the retransmitting and terminate services with all second UEs.

Optionally, in an embodiment of the disclosure, the apparatus is further configured to, in response to a groupcast retransmission count of the first UE reaching a second threshold and the difference between the number of ACK feedbacks received by the first UE and the expected threshold or the ratio of the number of ACK feedbacks received by the first UE to the expected threshold remaining less than the first gate value, stop the retransmitting and determine that a service with a second UE in the UE group that does not provide the ACK feedback is abnormally terminated, in an inactive state, or in a suspended state.

Optionally, in an embodiment of the disclosure, the apparatus is further configured to, in response to a unicast retransmission count of the first UE to the second UE reaching a second threshold and the difference between the number of ACK feedbacks received by the first UE and the expected threshold or the ratio of the number of ACK feedbacks received by the first UE to the expected threshold remaining less than the first gate value, stop the retransmitting and determine that a service with the second UE in the UE group that is required to provide the ACK feedback and does not provide the ACK feedback is abnormally terminated, in an inactive state, or in a suspend state.

Optionally, in an embodiment of the disclosure, the apparatus is further configured to, in response to a broadcast retransmission count of the first UE reaching the third threshold and the number of ACK feedbacks received by the first UE remaining less than the third gate value, stop the retransmitting and terminate a service.

Optionally, in an embodiment of the disclosure, the service includes a ranging service procedure and/or a positioning service procedure corresponding to the SLPP message and/or the RSPP message, or a session associated with the SLPP message and/or the RSPP message.

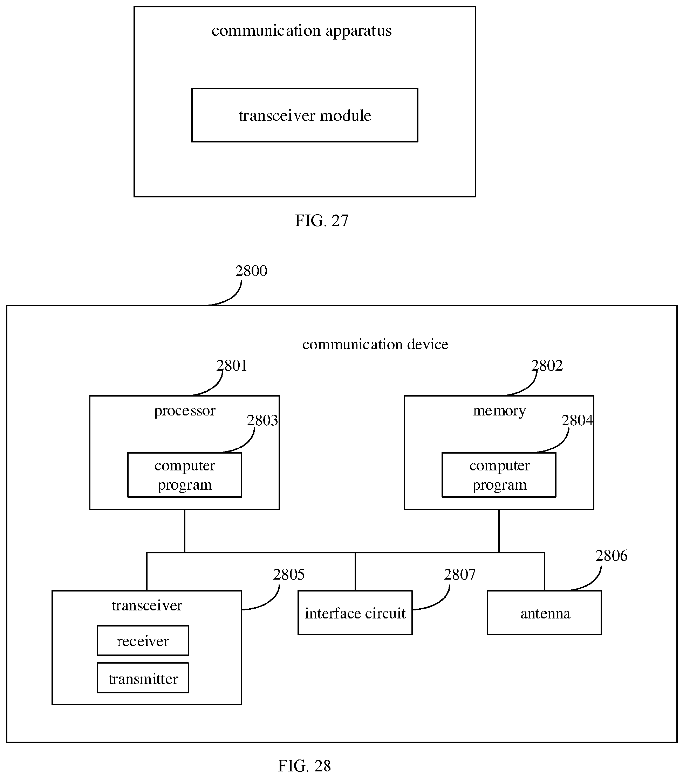

FIG. 27 is a block diagram illustrating a communication apparatus according to an embodiment of the disclosure. As shown in FIG. 27, the apparatus may include a transceiver module.

The transceiver module is configured to receive an SLPP message and/or an RSPP message, in which the SLPP message and/or the RSPP message includes indication information for indicating that an ACK feedback is required for the SLPP message and/or the RSPP message.

In summary, in the communication apparatus provided in embodiments of the disclosure, a second UE receives the SLPP message and/or the RSPP message. The SLPP message and/or the RSPP message includes the indication information for indicating that the ACK feedback is required for the SLPP message and/or the RSPP message. Accordingly, in the disclosure, the second UE receiving the SLPP message and/or the RSPP message is instructed to provide the ACK feedback to a first UE by including the indication information in the SLPP message and/or the RSPP message. Thus, the first UE may determine, based on the ACK feedback received by the first UE, which second UE does not successfully receive the SLPP messages and/or RSPP messages sent by the first UE. In this case, the first UE may retransmit the SLPP message and/or the RSPP message to the second UE that does not successfully receive the SLPP message and/or the RSPP message. This ensures the successful transmission of the SLPP message and/or the RSPP message for the second UE, ensures the transmission stability of the SLPP message and/or the RSPP message, and thus ensures the stability of an SL positioning and/or an SL ranging.

The SLPP message and/or the RSPP message further includes a sequence number.

The apparatus is further configured to, in response to receiving the SLPP message and/or the RSPP message, send the ACK feedback, in which the ACK feedback includes the sequence number corresponding to the SLPP message and/or the RSPP message.

Referring to FIG. 28, FIG. 28 is a schematic diagram illustrating a communication device 2800 according to an embodiment of the disclosure. The communication device 2800 may be a network device, a terminal, or a chip, a chip system or a processor that supports the network device to realize the above-described methods, or a chip, a chip system or a processor that supports the terminal to realize the above-described methods. The device may be configured to realize the methods described in the above method embodiments, and for details, please refer to the descriptions of the above-described method embodiments.

The communication device 2800 may include one or more processors 2801. The processor 2801 may be a general purpose processor or a dedicated processor, such as, a baseband processor or a central processor. The baseband processor is configured to process a communication protocol and communication data. The central processor is configured to control the communication device (e.g., a base station, a baseband chip, a terminal, a terminal chip, a central unit (CU) or a distributed unit (DU)), to executing a computer program, and to process data of the computer program.

Optionally, the communication device 2800 may include one or more memories 2802 on which a computer program 2804 may be stored. The processor 2801 executes the computer program 2804 to cause the communication device 2800 to perform the methods described in the above method embodiments. Optionally, data may also be stored in the memory 2802. The communication device 2800 and the memory 2802 may be provided separately or may be integrated together.

Optionally, the communication device 2800 may also include a transceiver 2805 and an antenna 2806. The transceiver 2805 may be referred to as a transceiver unit, a transceiver machine, or a transceiver circuit, for realizing a receiving and sending function. The transceiver 2805 may include a receiver and a transmitter. The receiver may be referred to as a receiver machine or a receiving circuit, for realizing a receiving function. The transmitter may be referred to as a sender machine or sending circuit, for realizing the sending function.

Optionally, the communication device 2800 may also include one or more interface circuits 2807. The interface circuits 2807 are configured to receive code instructions and transmit the code instructions to the processor 2801. The processor 2801 runs the code instructions to cause the communication device 2800 to perform the method described in the method embodiments.

In an implementation, the processor 2801 may include a transceiver for implementing the receiving and sending function. For example, the transceiver may be a transceiver circuit, an interface, or an interface circuit. The transceiver circuit, interface, or interface circuit for implementing the receiving and sending function may be separated, or may be integrated together. The transceiver circuit, interface, or interface circuit described above may be configured for code/data reading and writing, or may be configured for signal sending or delivery.

In an implementation, the processor 2801 may store the computer program 2803. The processor 2801 executes the computer program 2803 to cause the communication device 2800 to perform the methods described in the above method embodiments. The computer program 2803 may be solidified in the processor 2801, in which case the processor 2801 may be implemented by hardware.

In an implementation, the communication device 2800 may include circuits. The circuits may implement the sending, receiving or communicating function in the above method embodiments. The processor and the transceiver described in the disclosure may be implemented on an integrated circuit (IC), an analog IC, a radio frequency integrated circuit (RFIC), a mixed signal IC, an application specific integrated circuit (ASIC), a printed circuit board (PCB), and an electronic device. The processor and transceiver may also be produced using various IC process technologies such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the above description of embodiments may be the network device or the terminal, but a scope of the communication device described in the disclosure is not limited thereto, and a structure of the communication device may not be limited by FIG. 28. The communication device may be a stand-alone device or may be part of a larger device. For example the communication device may be:
(1) a stand-alone IC, a chip, a chip system or a subsystem;
(2) a collection of ICs including one or more ICs, where alternatively, the collection of ICs may also include storage components for storing data and a computer program;
(3) an ASIC, such as a modem;
(4) a module that may be embedded within other devices;
(5) a receiver, a terminal, a smart terminal, a cellular phone, a wireless device, a handheld machine, a mobile unit, an in-vehicle device, a network device, a cloud device, an artificial intelligence device, and the like; and
(6) others.

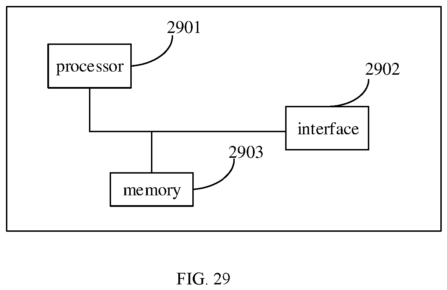

For the case where the communication device may be the chip or the chip system, please refer to the block diagram of the chip illustrated in FIG. 29. The chip illustrated in FIG. 29 includes a processor 2901 and an interface 2902. There may be one or more processors 2901, and there may be multiple interfaces 2902.

Optionally, the chip further includes a memory 2903 configured to store necessary computer programs and data.

It may be understood by those skilled in the art that various illustrative logical blocks and steps listed in embodiments of the disclosure may be implemented by electronic hardware, computer software, or a combination of both. Whether such function is implemented by hardware or software depends on a particular application and a design requirement of an entire system. Those skilled in the art may use various methods to implement the described function for each particular application, but such implementation should not be construed as being beyond the scope of protection of embodiments of the disclosure.

The disclosure also provides a readable storage medium for storing instructions. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination of both. When implemented using software, the above embodiments may be implemented, in whole or in part, in the form of the computer program product. The computer program product includes one or more computer programs. When the computer program is loaded and executed on the computer, all or part of processes or functions described in embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or in a wireless manner (e.g., by using infrared wave, wireless wave, or microwave). The computer-readable storage medium may be any usable medium to which the computer has access to or a data storage device such as a server and a data center integrated by one or more usable mediums. The usable medium may be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art understands that the first, second, and other various numerical numbers involved in the disclosure are only described for the convenience of differentiation, and are not used to limit the scope of the embodiments of the disclosure, but to indicate the order of precedence.

The term "at least one" in the disclosure may also be described as one or more, and the term "multiple" may be two, three, four, or more, which is not limited in the disclosure. In embodiments of the disclosure, for technical features, the terms "first", "second", and "third"; and "A", "B", "C" and "D" and the like are used to distinguish different technical features, the technical features described using the terms "first", "second", and "third"; and "A", "B", "C" and "D"; and the like do not indicate any order of precedence or magnitude.

The correspondences illustrated in the tables in the disclosure may be configured or may be predefined. The values of information in the tables are merely examples and may be configured to other values, which are not limited in the disclosure. In configuring the correspondence between the information and the parameters, there does not require that all the correspondences illustrated in the tables must be configured. For example, the above tables may be adjusted appropriately, such as splitting, merging, and the like. The names of the parameters illustrated in the headings of the above tables may be other names that are understood by the communication device, and the values or representations of the parameters may be other values or expressions that are understood by the communication device. Each of the above tables may also be implemented with other data structures, such as, arrays, queues, containers, stacks, linear tables, pointers, chained lists, trees, graphs, structures, classes, heaps, and hash tables.

The term "pre-definition" in the application may be understood as definition, pre-definition, storage, pre-storage, pre-negotiation, pre-configuration, curing, or pre-firing.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in hardware or software way depends on the particular application and design constraints of the technical solution. Those skilled in the art may use different ways to implement the described functions for each particular application, but such implementations should not be considered as beyond the scope of the disclosure.

It is clearly understood by those skilled in the field that, for the convenience and brevity of description, for detailed work processes of the systems, apparatuses, and units described above reference may be made to the corresponding processes in the above method embodiments, which are not be repeated here.

The above is only detailed implementations of the disclosure, but the scope of protection of the disclosure is not limited thereto. Those skilled in the art familiar to the technical field may easily think of changes or substitutions in the technical scope disclosed by the disclosure, which shall be covered by the scope of protection of the disclosure. Therefore, the scope of protection of the disclosure shall be governed by the scope of protection of the appended claims.

## Claims

1. A method for message transmission, performed by a first user equipment (UE), comprising:
sending a sidelink positioning protocol (SLPP) message and/or a ranging and sidelink positioning protocol (RSPP) message, wherein the SLPP message and/or the RSPP message comprises indication information for indicating that an acknowledgement (ACK) feedback is required for the SLPP message and/or the RSPP message.

2. The method of claim 1, wherein sending the SLPP message and/or the RSPP message comprises at least one of:
unicasting the SLPP message and/or the RSPP message to a second UE;
groupcasting the SLPP message and/or the RSPP message to a UE group comprising at least one second UE; or
broadcasting the SLPP message and/or the RSPP message.

3. The method of claim 2, wherein the SLPP message and/or the RSPP message further comprises a sequence number;
the method further comprising:
in response to receiving an ACK message comprising a sequence number corresponding to the SLPP message and/or the RSPP message, determining that an ACK feedback for the SLPP message and/or the RSPP message is received from the second UE;
in response to not receiving an ACK message comprising the sequence number corresponding to the SLPP message and/or the RSPP message within a preset time period, determining that no ACK feedback for the SLPP message and/or the RSPP message is received from the second UE.

4. The method of any one of claims 1 to 3, further comprising:
in response to not receiving the ACK feedback for the SLPP message and/or the RSPP message, retransmitting the SLPP message and/or the RSPP message.

5. The method of claim 4, wherein in response to the SLPP message and/or the RSPP message being sent by the first UE in a unicast way, retransmitting the SLPP message and/or the RSPP message comprises:
retransmitting the SLPP message and/or the RSPP message in the unicast way.

6. The method of claim 4, wherein in response to the SLPP message and/or the RSPP message being sent by the first UE in a groupcast way, retransmitting the SLPP message and/or the RSPP message comprises at least one of:
in response to a difference between a number of ACK feedbacks received by the first UE and an expected threshold or a ratio of the number of ACK feedbacks received by the first UE to the expected threshold being less than a first gate value, retransmitting the SLPP message and/or the RSPP message in the groupcast way;
in response to the difference between the number of ACK feedbacks received by the first UE and the expected threshold or the ratio of the number of ACK feedbacks received by the first UE to the expected threshold being greater than or equal to the first gate value and less than a second gate value, retransmitting the SLPP message and/or the RSPP message in a unicast way to a second UE in a UE group that is required to provide the ACK feedback and does not provide the ACK feedback; or
in response to the difference between the number of ACK feedbacks received by the first UE and the expected threshold or the ratio of the number of ACK feedbacks received by the first UE to the expected threshold being greater than the first gate value, retransmitting the SLPP message and/or the RSPP message in the unicast way to the second UE in the UE group that is required to provide the ACK feedback and does not provide the ACK feedback.

7. The method of claim 6, wherein in response to the SLPP message and/or the RSPP message being sent by the first UE in the groupcast way, the method further comprises at least one of:
in response to the difference between the number of ACK feedbacks received by the first UE and the expected threshold or the ratio of the number of ACK feedbacks received by the first UE to the expected threshold being greater than or equal to the second gate value, refraining from retransmitting the SLPP message and/or the RSPP message; or
in response to the difference between the number of ACK feedbacks received by the first UE and the expected threshold or the ratio of the number of ACK feedbacks received by the first UE to the expected threshold being greater than the first gate value, refraining from retransmitting the SLPP message and/or the RSPP message.

8. The method of claim 6 or 7, further comprising:
determining the expected threshold based on a number of second UEs in the UE group that are capable of participating in a service indicated by the SLPP message and/or the RSPP message.

9. The method of claim 4, wherein in response to the SLPP message and/or the RSPP message being sent by the first UE in a broadcast way, retransmitting the SLPP message and/or the RSPP message comprises:
in response to a number of ACK feedbacks received by the first UE being less than a third gate value, retransmitting the SLPP message and/or the RSPP message in the broadcast way.

10. The method of claim 5, further comprising:
in response to a unicast retransmission count of the first UE reaching a first threshold and no ACK feedback being received, stopping the retransmitting and terminating a service with the second UE.

11. The method of claim 6, further comprising:
in response to a groupcast retransmission count of the first UE reaching a second threshold and the difference between the number of ACK feedbacks received by the first UE and the expected threshold or the ratio of the number of ACK feedbacks received by the first UE to the expected threshold remaining less than the first gate value, stopping the retransmitting and terminating services with all second UEs.

12. The method of claim 6, further comprising:
in response to a groupcast retransmission count of the first UE reaching a second threshold and the difference between the number of ACK feedbacks received by the first UE and the expected threshold or the ratio of the number of ACK feedbacks received by the first UE to the expected threshold remaining less than the first gate value, stopping the retransmitting and determining that a service with a second UE in the UE group that does not provide the ACK feedback is abnormally terminated, in an inactive state, or in a suspended state.

13. The method of claim 6, further comprising:
in response to a unicast retransmission count of the first UE to the second UE reaching a second threshold and the difference between the number of ACK feedbacks received by the first UE and the expected threshold or the ratio of the number of ACK feedbacks received by the first UE to the expected threshold remaining less than the first gate value, stopping the retransmitting and determining that a service with the second UE in the UE group that is required to provide the ACK feedback and does not provide the ACK feedback is abnormally terminated, in an inactive state, or in a suspend state.

14. The method of claim 9, further comprising:
in response to a broadcast retransmission count of the first UE reaching the third threshold and the number of ACK feedbacks received by the first UE remaining less than the third gate value, stopping the retransmitting and terminating a service.

15. The method of any one of claims 8 or 10 to 14, wherein the service comprises a ranging service procedure and/or a positioning service procedure corresponding to the SLPP message and/or the RSPP message, or a session associated with the SLPP message and/or the RSPP message.

16. A method for message transmission, performed by a second user equipment (UE), comprising:
receiving a sidelink positioning protocol (SLPP) message and/or a ranging and sidelink positioning protocol (RSPP) message, wherein the SLPP message and/or the RSPP message comprises indication information for indicating that an acknowledgement (ACK) feedback is required for the SLPP message and/or the RSPP message.

17. The method of claim 16, wherein the SLPP message and/or the RSPP message further comprises a sequence number;
the method further comprising:
in response to receiving the SLPP message and/or the RSPP message, sending the ACK feedback, wherein the ACK feedback comprises the sequence number corresponding to the SLPP message and/or the RSPP message.

18. A communication apparatus, configured in a first user equipment (UE), comprising:
a transceiver module, configured to send a sidelink positioning protocol (SLPP) message and/or a ranging and sidelink positioning protocol (RSPP) message, wherein the SLPP message and/or the RSPP message comprises indication information for indicating that an acknowledgement (ACK) feedback is required for the SLPP message and/or the RSPP message.

19. A communication apparatus, configured in a second user equipment (UE), comprising:
a transceiver module, configured to receive a sidelink positioning protocol (SLPP) message and/or a ranging and sidelink positioning protocol (RSPP) message, wherein the SLPP message and/or the RSPP message comprises indication information for indicating that an acknowledgement (ACK) feedback is required for the SLPP message and/or the RSPP message.

20. A communication device, comprising a processor and a memory, wherein the memory stores a computer program that, when executed by the processor, causes the device to implement the method of any one of claims 1 to 15, or implement the method of any one of claims 16 to 17.

21. A communication device comprising: a processor and an interface circuit; wherein
the interface circuit is configured to receive code instructions and transmit the code instructions to the processor; and
the processor is configured to execute the code instructions to implement the method of any one of claims 1 to 15, or implement the method of any one of claims 16 to 17.

22. A computer-readable storage medium, configured to store instructions, wherein when the instructions are executed, the method of any one of claims 1 to 15 or the method of any one of claims 16 to 17 is implemented.
